(19) Europäisches Patentamt
European Patent Office
Office européen des brevets

(11) EP 2 684 652 A1

# (12) EUROPÄISCHE PATENTANMELDUNG

(43) Veröffentlichungstag:
**15.01.2014 Patentblatt 2014/03**

(51) Int Cl.:
***B25J 13/02*** *(2006.01)*

(21) Anmeldenummer: **12005068.7**

(22) Anmeldetag: **09.07.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **EPPENDORF AG**
**22339 Hamburg (DE)**

(72) Erfinder:
- **Knofe, Dieter**
  **22417 Hamburg (DE)**
- **Flucke, Christian, Dr.**
  **22395 Hamburg (DE)**
- **Maass, Andreas**
  **22083 Hamburg (DE)**

(74) Vertreter: **Ricker, Mathias**
**Wallinger Ricker Schlotter Tostmann**
**Patent- und Rechtsanwälte**
**Zweibrückenstrasse 5-7**
**80331 München (DE)**

## (54) Bedienvorrichtung zur Steuerung einer Bewegungseinrichtung und Verfahren

(57) Die Erfindung bezieht sich auf eine Bedienvorrichtung (1) zur Steuerung einer Bewegungseinrichtung (10), insbesondere der Bewegungseinrichtung eines Mikromanipulators zur Manipulation von biologischen Zellen, und ein Verfahren zur Steuerung der Bewegungseinrichtung. Die Bedienvorrichtung weist eine elektrische Steuereinrichtung (3) und eine Eingabeeinrichtung (2) mit verschiedenen Eingabezonen (41, 42) auf, mittels derer die Bewegungseinrichtung nach unterschiedlichen Steuerungsregeln (33, 34) steuerbar ist.

Fig. 1a

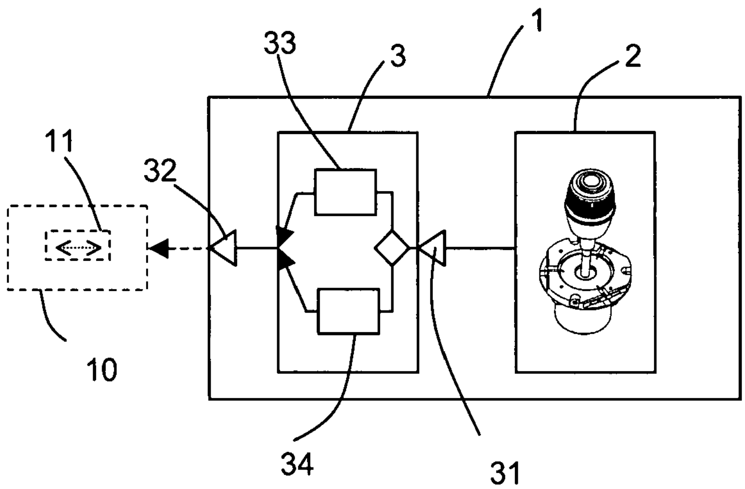


EP 2 684 652 A1

Fig. 1b

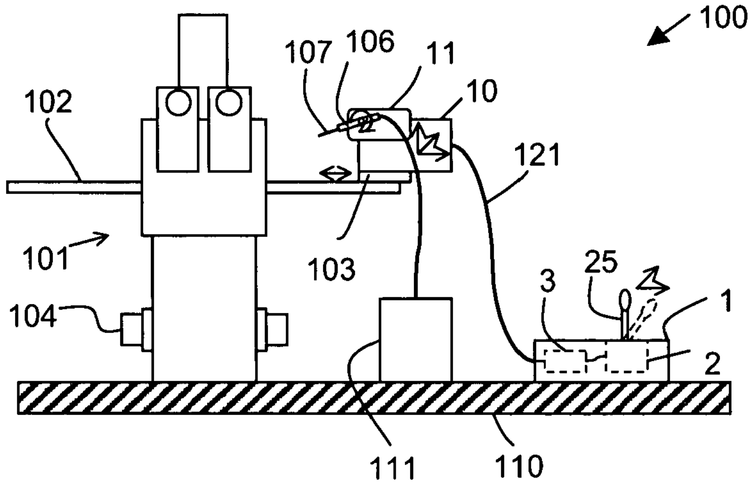

**Beschreibung**

Die Erfindung bezieht sich auf eine Bedienvorrichtung zur Steuerung einer Bewegungseinrichtung, insbesondere der Bewegungseinrichtung einer Mikropositioniereinrichtung, insbesondere eines Mikromanipulators, und ein Verfahren zur Steuerung der Bewegungseinrichtung.

Mikropositioniereinrichtungen dienen der benutzergesteuerten Durchführung von präzisen Bewegungen, deren Positionsgenauigkeit bzw. Auflösung im Bereich von wenigen zehn Nanometern bis einigen Mikrometern liegen kann. Sie werden überall dort eingesetzt, wo die präzise Positionierung einer Komponente erforderlich ist. Mikromanipulatoren weisen eine solche Mikropositioniereinrichtung auf, deren Bewegungseinrichtung mit einem Werkzeug koppelbar ist. Durch exakte Positionierung des Werkzeugs können präzise Manipulationen an Mikrostrukturen durchgeführt werden. Solche Mikrostrukturen können künstlich sein, z.B. chipbasierte Mikro- und Nanosysteme, oder können biologisch sein, z.B. lebende Zellen. Die Bedienvorrichtung gemäß der Erfindung ist eine Laborvorrichtung und wird in Laboren angewandt, insbesondere in Mikrofertigungslaboren, Halbleiterlaboren und biologischen bzw. medizinischen Laboren.

Eine bekannte Bedienvorrichtung zur Steuerung der Bewegung eines Mikromanipulators zur Manipulation von biologischen Zellen mittels eines Werkzeugs wird von der Eppendorf AG, Hamburg, Deutschland unter der Bezeichnung "TransferMan NK2®" vertrieben. Diese Bedienvorrichtung wurde für Arbeitsabläufe entwickelt, bei denen eine proportionale Bewegung der Kapillare mittels einer Bedienvorrichtung erforderlich ist. Die proportionale Bewegung ist besonders geeignet für die intrazytoplasmatische Spermatozoeninjektion (ICSI), den Transfer von embryonalen Stammzellen (ES-Zellen) in Blastozysten und /oder frühe Embryonen (Acht-Zell Stadium) und für andere Arbeitstechniken, bei denen die präzise Kontrolle der Bewegung des verwendeten Werkzeugs erforderlich ist. Der Benutzer steuert die Bewegung des Mikromanipulators durch Schwenken eines Joysticks innerhalb dessen maximal möglichen Eingabebereichs, wobei der Eingabebereich üblicherweise ein kegelförmiger Bereich bzw. ein Raumwinkel ist, dessen Spitze bzw. Ursprung der Schwenkpunkt des Joystickhebels ist. Der Raumwinkel entspricht in der Regel einem geraden Kreiskegel .

Bei dem proportionalen Joystick-Steuerungs-Modus, d.h. bei Steuerung mittels einer Steuerungsregel zur Proportionalsteuerung, folgt das Werkzeug direkt der Steuerungsbewegung des Benutzers. Dabei hängt die Bewegung bzw. Positionsänderung dX des Werkzeugs entlang einer Achse X proportional mit der Bewegung dX' des Joysticks entlang einer Achse X' durch den Benutzer zusammen. Das kann mathematisch ausgedrückt werden als

$$dX \sim dX', \text{ oder } dX = c * dX',$$

wobei c eine numerische Konstante ist.

Der maximal mögliche Eingabebereich entspricht für eine vorgegebene Konstante c einem maximalen Bewegungsbereich des Werkzeugs. Will der Benutzer das Werkzeug über den maximalen Bewegungsbereich hinaus bewegen, bietet die bekannte Bedienvorrichtung die Möglichkeit, die Proportionalsteuerung zwischen Joystick und Bewegungseinrichtung abzuschalten, indem ein Knopf der Bedienvorrichtung betätigt wird. Während dem Drücken des Knopfes wird keine Positionsänderung der Bewegungseinrichtung bewirkt, insbesondere dann nicht, wenn der Benutzer den Joystick bei gedrücktem Knopf bewegt. Will der Benutzer das Werkzeug nun über den maximalen Bewegungsbereich hinaus bewegen, so schaltet er bei Erreichen eines Endes des maximalen Eingabebereiches des Joysticks die Proportionalitätssteuerung mittels Knopfdruck ab, bewegt bei gedrücktem Knopf den Joystick in eine entgegengesetzte Richtung, und aktiviert erneut die Proportionalitätssteuerung durch Loslassen des Knopfes, wonach er wie gewohnt mittels Proportionalsteuerung die gewünschte weitere Bewegung des Werkzeugs über den zuvor benannten maximalen vorausgehenden Bewegungsbereich des Werkzeugs bewirken kann. Das Vorgehen, als Nachfassen bezeichnet, kann der Benutzer in erforderlicher Anzahl wiederholen, um das Werkzeug über eine gewünschte Strecke zu bewegen.

Typischerweise muss bei der Manipulation von Zellen das Werkzeug zunächst über eine relativ große Distanz im Bereich von Millimetern an die Zelle heranbewegt werden, was in der Praxis gewöhnlich unter einem optischen Mikroskop in verschiedenen Auflösungen beobachtet wird. Nahe der Zelle, insbesondere im Abstand weniger Zelldurchmesser von der Zelle, also innerhalb von wenigen Mikrometern oder wenigen zehn Mikrometern von der Zellwand, ist besondere Sorgfalt des Anwenders geboten, um die mitunter äußerst wertvollen Zellen nicht versehentlich zu schädigen. Nahe der Zelle ist eine Feinsteuerung erforderlich. Bei der bekannten Bedienvorrichtung wird die Zelle zunächst durch wiederholtes Bewegen des Joysticks angefahren, wie beschrieben. Diese Wiederholungen der Bewegung wurden aber mitunter als unkomfortabel empfunden. Ferner erscheint dieses Steuerungskonzept relativ unflexibel. Die wiederholten Joystickbewegungen führen ferner zu einer erhöhten mechanischen Belastung der Bedienvorrichtung.

Es ist Aufgabe der Erfindung, eine flexible Bedienvorrichtung und ein Verfahren zur Steuerung einer Bewegungseinrichtung bereitzustellen, die flexibel und komfortabel sind.

Die Erfindung löst diese Aufgabe durch die Bedienvorrichtung nach Anspruch 1 und das Verfahren nach Anspruch 15. Bevorzugte Ausgestaltungen sind insbesondere Gegenstände der Unteransprüche.

Vorteil der Erfindung ist, dass die Steuerung der Bewegungseinrichtung flexibel ist, da durch geeignetes Bewegen des beweglichen Elementes innerhalb des Eingabebereichs mindestens zwei verschiedene Steuerungsregeln, nämlich insbesondere Steuerungs-Modi, anwendbar sind. Ferner muss der Benutzer die Steuerunnsregetn nicht manuel ändern, sondern bewirkt auf intuitive Weise diesen Wechsel zwischen zwei Steuerungsregeln, indem der Wechsel automatisch stattfindet, wenn der Benutzer das bewegliche Element von der ersten Eingabezone in die zweite Eingabezone bewegt.

Das bewegliche Element kann ein vom Benutzer bedienbares Betätigungselement sein, z.B. ein Joystickhebel, ein Schieberegler, ein Wippenelement, oder ein Trackball etc. In diesem Fall kann das bewegliche Element ein Bestandteil der Eingabeeinrichtung sein. Es ist aber auch möglich, dass das bewegliche Element kein Bestandteil der Eingabeeinrichtung ist, indem es z.B. die Fingerspitze eines Benutzers ist. In diesem Fall kann die Eingabeeinrichtung z.B. einen als berührungsempfindliche Strecke, Fläche oder als Raum ausgebildeten Eingabebereich aufweisen, z.B. ein Touchpad oder Touchscreen, innerhalb der/dem die Fingerspitze vom Benutzer geführt werden kann. Ein der Fingerspitze zugeordneter Positionswert wird dann mittels Eingabeeinrichtung erfasst. Der Eingabebereich kann berührungsempfindlich sein oder z.B. eine berührungslose Erfassung des Positionswertes eines beweglichen Elements durchführen, z.B. durch eine optische Messung. Die erfindungsgemäße Bedienvorrichtung erlaubt insbesondere das intuitive einhändige Steuern der Bewegung, so dass eine Hand des Benutzers frei bleibt und für andere Tätigkeiten zur Verfügung steht.

Ein Positionswert im Sinne dieser Beschreibung ist ein Oberbegriff für verschiedene physikalische Parameter, mit denen die Position und/oder Bewegung eines beweglichen Elements charakterisierbar ist. Die Position bezeichnet eine Ortsvariable, z.B. x, y, z oder ein Winkel, wie nachfolgend ausgeführt. Die Bewegung bezeichnet die Geschwindigkeit und gegebenenfalls auch die Beschleunigung, bezogen auf eine der Ortsvariablen. Ein Positionswert kann ein skalarer Wert sein oder ein vektorieller Wert sein. Ein Positionswert kann also ein- oder mehrdimensional sein und kann deshalb mindestens einen und vorzugsweise mehrere Werte beinhalten. Ein Positionswert mindestens eine absolute oder relative Positionsangabe beinhalten, z.B. die Variablen x, y und/oder z in einem kartesischen Koordinatensystem, oder den Radius und den Winkel $\alpha$ in einem Polarkoordinatensystem und/oder den Radius und die Raumwinkel $\beta$, $\chi$ in einem Kugelkoordinatensystem, oder eben Änderungen dieser Parameter, d.h. Relativpositionen, die als Positionsänderungen bezeichnet werden. Alternativ oder zusätzlich zu der Positionsangabe kann der Positionswert ferner alternativ oder zusätzlich dazu die Geschwindigkeiten der genannten Koordinaten aufweisen, also die zeitlichen Orts-Änderungsraten vx, vy, vz, vR, $v\alpha$, $v\beta$, $v\chi$ dieser Positionsangaben. Alternativ oder zusätzlich dazu kann der Positionswert ferner alternativ oder zusätzlich dazu die Beschleunigungen der genannten Koordinaten aufweisen, also die zeitlichen Geschwindigkeits-Änderungsraten ax, ay, az, aR, $a\alpha$, $a\beta$, $a\chi$ dieser Positionsangaben. Diese Parameter können positive und negative Werte annehmen, so dass die Richtung eines beweglichen Elements eindeutig charakterisierbar ist. Die Eingabeeinrichtung kann insbesondere eine Bewegung und Erfassung des beweglichen Elements in einer, zwei oder drei Dimensionen vorsehen. Das Eingabesignal kann ferner eine Zeitinformation enthalten.

Die erste Steuerungsregel und die zweite Steuerungsregel unterscheiden sich immer. Vorzugsweise ist die erste Steuerungsregel zur Durchführung einer Proportionalsteuerung ausgebildet. Vorzugsweise ist dabei, oder unabhängig davon, die zweite Steuerungsregel zur Durchführung einer Dynamiksteuerung ausgebildet. Beide Begriffe werden im Rahmen dieser Beschreibung erläutert. Die erste Steuerungsregel und die zweite Steuerungsregel können auch beide eine Proportionalsteuerung betreffen oder beide eine Dynamiksteuerung betreffen, wobei dann vorzugsweise der Unterschied darin besteht, dass der Faktor c sich unterscheidet, indem z.B. für die erste Steuerungsregel ein erster Proportionalitätsfaktor c1 und für die zweite Steuerungsregel ein zweiter Proportionalitätsfaktor c2 verwendet wird, wobei c2 ungleich c1 ist.

Eine Steuerungsregel im Sinne der Beschreibung der vorliegenden Erfindung ist eine in der Steuerungseinrichtung vorgegebene Vorschrift, nach der in der Steuereinrichtung das variable Ausgabesignal in Abhängigkeit vom variablen Eingabesignal erzeugt wird. Unabhängig davon ist das Eingabesignal immer abhängig vom Positionswert, so dass auch das Ausgabesignal immer abhängig vom Positionswert ist. Die Vorschrift kann durch eine mathematische Funktion, durch eine digitale und/oder analoge elektrische Schaltung und/oder durch eine feste Zuordnung von Ein- und Ausgabesignalen und/oder dafür benötigten Werten gemäß einer Tabelle vorgegeben sein, die in der Steuerungseinrichtung gespeichert sein kann. Durch diese Steuerungsregel kann z.B. entweder gemäß einer ersten Steuerungsregel eine Proportionalsteuerung der Bewegungseinrichtung oder gemäß einer zweiten Steuerungsregel eine dynamische Steuerung der Bewegungseinrichtung realisiert werden.

Bei einer Proportionalsteuerung ist die von der Bewegungseinrichtung durchzuführende Positionsänderung, insbesondere Verschiebung, proportional zu der vom beweglichen Element durchgeführten Positionsänderung. Bei einer Proportionalsteuerung ist das Ausgangssignal der Steuerungseinrichtung dazu ausgebildet, die von der Bewegungseinrichtung durchzuführende Positionsänderung, insbesondere Verschiebung, proportional zu der vom beweglichen Element durchgeführten Positionsänderung zu bewirken.

Vorteil der Proportionalsteuerung ist, dass sehr präzise Bewegungen der Bewegungseinrichtungen durch den Benutzer bewirkt werden können. Insbesondere ist bei einer besonders großen Untersetzung, also bei kleinem Faktor c, eine Feineinstellung der Werkzeugposition eines Manipulators möglich, die sich insbesondere zur Zellmanipulation eignet. Zellmanipulation umfasst die Mikromanipulation, also das Halten und den Transfer von Zellen mittels Mikrowerkzeugen, die des Weiteren nur Werkzeuge genannt werden, z.B. Kapillaren, die Mikroinjektion und die Mikrodissektion.

Die Positionsänderung kann sich auf einen Parameter beziehen, der die Position bestimmt, z.B. die x, y, und/oder z-Koordinate für ein kartesisches Koordinatensystem und/oder die Radius- bzw. Winkel-Koordinate (n) eines Polarkoordinatensystems oder auch eines Kugelkoordinatensystems.

Beispielsweise kann das bewegliche Element der Bedieneinrichtung eine solche Positionsänderung durchführen, und/oder diese Positionsänderung kann entsprechend erfasst werden. Das bewegliche Element kann z.B. eindimensional translatorisch bewegbar sein, z.B. entlang der x-Achse, oder rotierbar um diese Achse. Es ist vorzugsweise zweidimensional bewegbar, z.B. translatorisch parallel der x-y-Ebene oder rotierbar um zumindest die x-Achse und die y-Achse. Es kann auch dreidimensional bewegbar sein, z.B. translatorisch im Raum des x-y-z-Koordinatensystems und/oder rotierbar um zumindest die x-Achse, die y-Achse und/oder die z-Achse eines Koordinatensystems. Es können entweder nur Strecken entlang der x-, y- und/oder z-Achse verwendet werden oder nur Winkel um diese Achsen verwendet werden. Es können aber auch sowohl Strecken und Winkel verwendet werden, d.h. z.B. das bewegliche Element verschoben und rotiert werden und die entsprechenden Parameter gemessen werden.

Es ist bevorzugt, dass ein von der Bewegungseinrichtung bewegtes Element, z.B. das Werkzeug eines Mikromanipulators, genau diese Art - z.B. x-, y- oder z-Koordinate bzw. Winkel um eine solche Achse - von Positionsänderungen durchführt, die der Art der Positionsänderung des beweglichen Elements entspricht. Eine translatorische Positionsänderung des beweglichen Elements entlang der x-Achse, z.B., führt dann entsprechend zu einer translatorischen Bewegung des bewegten Elements der Bewegungseinrichtung entlang der x-Achse, oder entlang der x'-Achse eines anderen Koordinatensytems (x', y', z'). Als weiteres Beispiel führt z.B. eine rotatorische Positionsänderung des beweglichen Elements um die x-Achse dann entsprechend zu einer rotatorischen Bewegung des bewegten Elements der Bewegungseinrichtung um die x-Achse, oder um die x'-Achse eines anderen Koordinatensytems (x' ,y', z').

Es ist auch möglich und bevorzugt, dass ein von der Bewegungseinrichtung bewegtes Element, z.B. das Werkzeug eines Mikromanipulators, eine andere Art von Positionsänderung durchführt, als die, welche der Art der Positionsänderung des beweglichen Elements entspricht. Es kann z.B. eine translatorische Positionsänderung des beweglichen Elements entlang der x-Achse zu einer translatorische Positionsänderung des bewegten Elements entlang der y- oder z-Achse führen. Es kann auch die translatorische Positionsänderung des beweglichen Elements entlang der x-Achse zu einer rotatorischen Positionsänderung des bewegten Elements um eine Achse (x- y- oder z-Achse oder andere Achse) führen.

Bei einer Proportionalsteueruna kommt es nicht darauf an, zwisohen welchen Ortsparametern der proportionale Zusammenhang besteht. Wesentlich für die Proportionalsteuerung ist, dass die Positionsänderung dP2 des von der Bewegungseinrichtung bewegten Elements proportional ist zu der Positionsänderung dP1 des vom Benutzer bedienten beweglichen Elements der Eingabeeinrichtung, was mathematisch z.B. ausgedrückt werden kann durch

$$dP2 \sim dP1 \text{ oder } dP2 = c * dP1,$$

wobei c eine numerische Konstante ist. Die Variablen dP1, dP2 können für eine Streckenänderung oder Winkeländerung stehen. dP1 kann eine Streckenänderung betreffen, dP2 kann gleichzeitig eine Winkeländerung betreffen, oder umgekehrt.

Im Unterschied zur Proportionalitätssteuerung ist bei einer Dynamiksteuerung die von der Bewegungseinrichtung eingehaltene Geschwindigkeit v abhängig von der vom beweglichen Element eingenommenen Relativposition P _re Das heisst, vorzugsweise ist v eine Funktion von P_rel:

$$v = v(P_rel).$$

Der Vorteil der Dynamiksteuerung liegt darin, dass durch das Erhöhen der Geschwindigkeit eine längere Strecke des bewegten Elements schneller, aber in (geschwindigkeits-) geregelter Weise, und dabei komfortabel, zurückgelegt werden kann, als z.B. im Proportionalitäts-Modus, der für das Zurücklegen derselben Strecke das wiederholte Bewegen des beweglichen Elements, respektive Eingabemittels, und damit eine längere Zeit und erhöhten Aufwand erfordert.

Die Abhängigkeit v(P_rel) kann aber auch durch Zuordnungen einer zweidimensionalen, dreidimensionalen oder mehrdimensionalen Tabelle gegeben sein, die in der Steuerungsvorrichtung gespeichert sein kann. Der Parameter v kann eine skalare Größe sein oder kann vektoriell sei, und kann z.B. die Geschwindigkeitswerte vx, vy, vz für verschiedene Bewegungsrichtungen x, und/oder y und/oder z und/oder betreffend eine Winkelgeschwindigkeit $v\alpha$. aufweisen

Vorzugsweise ist die von der Bewegungseinrichtung eingehaltene Geschwindigkeit v proportional zu der vom beweglichen Element eingenommenen Relativposition P_rel:

$$v = c * P_rel,$$

wobei c ein Standardisierungsfaktor ist, also z.B. eine numerische Zahl mit der Einheit "eins pro Sekunde". v kann ein skalare oder vektorielle Größe sein. P_rel kann dann als Strecke von einem Startpunkt mit der Geschwindigkeit Null bis zur aktuellen Position des beweglichen Elements aufgefasst werden. Die Abhängigkeit v (P_rel) kann aber auch in anderer Weise definiert werden.

Die Relativposition P_rel wird vorzugsweise in Bezug auf eine Ausgangsposition des beweglichen Elements gemessen, in der dieses vorzugsweise die Geschwindigkeit Null hat.

Bei einer Dynamiksteuerung ist das Ausgangssignal der Steuerungseinrichtung dazu ausgebildet, das bewegte Element der Bewegungseinrichtung mittels dieser Geschwindigkeit v anzusteuern.

Die Geschwindigkeit kann sich auf einen Parameter beziehen, der die Geschwindigkeit bestimmt, z.B. die Geschwindigkeit entlang der x, y, und/oder z-Koordinate für ein kartesisches Koordinatensystem und/oder die Geschwindigkeit entlang des Radius- bzw. die Winkelgeschwindigkeiten entlang der Winkel-Koordinate(n) eines Polarkoordinatensystems oder auch eines Kugelkoordinatensystems.

Die dritte Eingabezone kann eine Totzone sein oder eine solche Totzone aufweisen. Die dritte Eingabezone liegt vorzugsweise zwischen der ersten und der zweiten Eingabezone. Vorzugsweise wird das Ausgabesignal von der Steuereinrichtung gemäß einer dritten Steuerungsregel, insbesondere einer Steuerungsregel für die Totzone erzeugt, wenn das bewegliche Element in der dritten Eingabezone, insbesondere Totzone, angeordnet ist. Vorzuasweise bewirkt die Steuerungsregel für die Totzone, dass ein Ausgabesignal derart erzeugt wird, dass das bewegte Element der Bewegungseinrichtung nicht bewegt wird, wenn das bewegliche Element in der Totzone angeordnet ist. Die dritte Steuerungsregel kann auch vorsehen, dass das Ausgabesignal Null ist, insbesondere, dass mindestens ein dem Ausgabesignal zugeordneter Datenwert oder mindestens ein dem Ausgabesignal zugeordneter Signalspannungspegel Null ist.

Die Totzone T umfasst vorzugsweise einen Bruchteil f des gesamten Eingabebereichs E, also T = f * E, wobei T und E Raumwinkelbereiche, also kegelförmige oder teilkegelförmige Raumsektoren, Flächen, Strecken, oder Volumina aufweisen können, und f eine Zahl kleiner als 1 ist, wobei f aus der Gruppe von bevorzugten Bereichen gewählt ist {(0,01 < f < 0,03); (0,03 < f < 0,08); (0,08 < f < 0,15)}. Die Totzone dient dazu, den Wechsel zwischen zwei Steuerungsregeln in definierter Weise zu gestalten, um z.B. zu verhindern dass fluktuierende Zwischenzustände auftreten, in denen der Joystickhebel genau auf der Grenze zwischen erster du zweiter Eingabezone steht. Auf diese Weise werden insbesondere Toleranzen beim Bau der Eingabeeinrichtung kompensiert. Dies kann aber auch ohne eine Totzone erreicht werden, indem z.B. innerhalb einer dritten Zone eine Steuerungsregel für den Zonenübergang verwendet wird, die ohne das Stoppen der Antriebe der Bewegungseinrichtung arbeitet.

Die Bedienvorrichtung kann einen Basiskörper aufweisen, der vorzugsweise die Steuereinrichtung und die Eingabeeinrichtung mit deren Eingabebereich trägt. Die Bedienvorrichtung kann ferner eine Gehäuseeinrichtung aufweisen, die die Steuereinrichtung und vorzugsweise die Eingabeeinrichtung zur Umgebung hin zumindest teilweise oder vollständig abschirmt oder umhüllt. Die Bedienvorrichtung kann außer der Eingabeeinrichtung weitere Eingabemöglichkeiten für den Benutzer aufweisen, insbesondere einen oder mehrere Knöpfe und/oder Regler, und/oder eine Tastatur, und/oder eine Anzeigeneinrichtung, z.B. ein Display, und/oder einen Touchscreen. Die Bedienvorrichtung kann eine Energiequelle aufweisen, insbesondere eine Batterie, oder ein Kabel für die externe Energieversorgung, sowie ggf. ein Netzteil. Die Bedienvorrichtung weist vorzugsweise eine Schnittstelleneinrichtung auf, die der Weitergabe des Ausgabesignals an die Bewegungseinrichtung einer externen Positioniereinrichtung dient. Diese Schnittstelleneinrichturn ist vorzugsweise kabelgebunden, kann aber auch drahtlos sein. Vorzugsweise weist die Schnittstelleneinrichtung mehrere voneinander isolierte elektrische Leitungen, also Kabel, auf. Dabei sind vorzugsweise jeweils zwei Kabel zur Gleichstromsteuerung eines Schrittmotors der Bewegungseinrichtung anschließbar, um Ort und Geschwindigkeit eines Schrittmotors zu steuern und/oder zu regeln.

Die elektrische Steuerungseinrichtung kann am Basiskörper und/oder in der Gehäuseeinrichtung angeordnet sein oder kann außerhalb des Basiskörpers und/oder der Gehäuseeinrichtung angeordnet sein, aber vorzugsweise jedenfalls mit der Eingabeeinrichtung signalverbunden sein.

Die Steuerungseinrichtung ist vorzugsweise dazu ausgebildet, um gemäß dem erfindungsgemäßen Verfahren das Ausgabesignal in Abhängigkeit vom Eingabesignal zu erzeugen, insbesondere unter Verwendung von geeigneten Computerdaten, insbesondere ausführbarem Programmcode, wie erläutert wird. Die Computerdaten werden vorzugsweise von einer elektrischen Steuereinrichtung einer Bedienvorrichtung, insbesondere der erfindungsgemäßen Bedienvorrichtung, zur Ausführung des erfindungsgemäßen Verfahrens verwendet.

Vorzugsweise weist die erfindungsgemäße elektrische Steuerungseinrichtung eine Rechenanlage zur Verarbeitung von digitalen Daten auf, vorzugsweise einen Mikroprozessor. Die Steuereinrichtung ist vorzugsweise programmierbar und weist vorzugsweise eine programmierbare Rechenanlage auf. Vorzugsweise weist die Steuerungseinrichtung eine Speichereinrichtung zur permanenten und/oder flüchtigen Speicherung von Daten auf, vorzugsweise ferner einen Programmspeicher zur permanenten Speicherung von Computerdaten, insbesondere eines ausführbaren Programmcodes. Der Programmspeicher enthält die Computerdaten bzw. den ausführbaren Programmcode. Der Programmspeicher kann z.B. ein Flash-Speicher oder ein EEPROM sein. Der ausführbare Programmcode kann in einer Firmware vorliegen, die Bestandteil der Bedienvorrichtung ist.

Die Computerdaten, insbesondere der ausführbaren Programmcode, sind/ist vorzugsweise dazu ausgebildet, um gemäß dem erfindungsgemäßen Verfahren das Ausgabesignal in Abhängigkeit vom Eingabesignal zu erzeugen. Die Computerdaten, insbesondere der ausführbare Programmcode, sind/ist vorzugsweise dazu ausgebildet, um gemäß der ersten Steuerregel anhand des Eingabesignals ein erstes Ausgabesignal zu erzeugen, wenn das bewegliche Element in der ersten Eingabezone angeordnet ist. Die Computerdaten, insbesondere der ausführbare Programmcode, sind/ist vorzugsweise dazu ausgebildet, um gemäß der zweiten Steuerregel anhand des Eingabesignals ein zweites Ausgabesignal zu erzeugen, wenn das bewegliche Element in der zweiten Eingabezone angeordnet ist. Die Computerdaten, insbesondere der ausführbare Programmcode, sind/ist vorzugsweise dazu ausgebildet, um gemäß der dritten Steuerregel anhand des Eingabesignals ein drittes Ausgabesignal zu erzeugen, wenn das bewegliche Element in der dritten Eingabezone angeordnet ist.

Die Steuerungseinrichtung weist vorzugsweise eine Antriebssteuerung auf, die vorzugsweise zur Regelung mindestens eines Antriebs der Bewegungseinrichtung ausgebildet ist. Die Antriebssteuerung wird vorzugsweise durch ein zweites Eingabesignal gesteuert, das vorzugsweise von der Steuereinrichtung bestimmt wurde und die Werte für die Positionierung und/oder Geschwindigkeit und/oder Beschleunigung mindestens eines Antriebs der Bewegungseinrichtung enthält. Die Antriebssteuerung erzeugt dann das Ausgabesignal der Steuereinrichtung, durch das die Bewegungseinrichtung steuerbar ist. Die Antriebssteuerung kann auch außerhalb der Steuereinrichtung vorgesehen sein, insbesondere als Bestandteil der Bedienvorrichtung oder außerhalb davon. In diesem Fall ist das von der Steuerungseinrichtung erzeugte Ausgabesignal das Eingangssignal für die Antriebssteuerung, die wiederum das zweite Ausgabesignal zur Ansteuerung der Bewegungseinrichtung erzeugt. Auch in diesem Fall ist also mit dem Ausgabesignal der Steuerungseinrichtung die Bewegungseinrichtung steuerbar.

Die Antriebssteuerung ist vorzugsweise dazu ausgebildet, den mindestens einen Antrieb so zu steuern, dass er den gewünschten Betriebszustand einnimmt, also die gewünschte Position und/oder Geschwindigkeit und/oder Beschleunigung einhält. Dazu kann die Antriebssteuerung Steuerunqsmittel aufweisen, um den Antrieb von einem aktuellen Betriebszustand in gesteuerter oder geregelter Weise in den gewünschten Betriebszustand zu versetzen, um ruckartige Belastung des Antriebs und Schwingungsbildung zu verhindern. Antriebssteuerungen für Schrittmotoren etc. sind z.B. bekannt und im Handel erhältlich.

Die Bewegungseinrichtung kann mindestens einen Antrieb aufweisen. Der Antrieb kann ein Motor sein, insbesondere ein elektrisch betriebener Motor, vorzugsweise ein Linearmotor, vorzugsweise ein Schrittmotor, der vorzugsweise durch Gleichstrom betrieben wird. Der Antrieb kann aber auch einen hydraulischen, pneumatischen Aktuator aufweisen, oder einen piezoelektrischen Aktuator. Das bewegte Element ist durch den Antrieb bewegbar. Das bewegte Element kann ein einzelnes Bauteil sein, z.B. ein Werkzeughalter, oder kann eine Baugruppe mit mehreren Bauteilen sein, z.B. aufweisend ein bewegliches Schlittenelement, und/oder eine Haltevorrichtung zum Halten eines Werkzeughalters, insbesondere Kapillarenhalters, und/oder eine Befestigungsvorrichtung zum Verbinden von solchen Bauteilen miteinander, etc.

Durch das Ausgangssignal ist die Bewegungseinrichtung steuerbar. Die Bewegungseinrichtung ist aber nicht Bestandteil der erfindungsgemäßen Bedienvorrichtung. Wird die Bewegungseinrichtung über eine Schnittstelleneinrichtung mit der Bedienvorrichtung verbunden, so wird ermöglicht, dass die Bewegungseinrichtung durch das Ausgabesignal der Steuereinrichtung gesteuert wird. Die Bewegungseinrichtung und die Bedienvorrichtung sind dann signalverbunden.

Die Steuerungseinrichtung kann auch dazu ausgebildet sein, mindestens ein Ausgabesignal zu erzeugen. Ferner kann die Steuerungseinrichtung auch dazu ausgebildet sein, mindestens zwei Ausgabesignale zu erzeugen, von denen jedes zur Steuerung einer Bewegungseinrichtung ausgebildet ist, die insbesondere eine gleiche Bauweise oder eine verschiedene Bauweise aufweisen können. Es kann dann z.B. die Steuerungseinrichtung weiter so ausgebildet sein, dass der Benutzer über eine Benutzerschnittstelle der Bedienvorrichtung, z.B. eine Tastatur oder einen Knopf oder Schalter, die gewünschte Bedieneinrichtung auswählt; die gesteuert werden soll une/ode deren Ausgabesignal erzeugt werden soll. Die mindestens eine oder zwei Bewegungseinrichtung(en) kann/können permanent mit der Bedienvorrichtung verbindbar sein oder signalverbunden sein oder können bei Bedarf verbindbar sein.

Signalverbunden bedeutet, dass Informationen auf technische Weise austauschbar sind, z.B. drahtgebunden, z.B. über eine Kabeleinrichtung, oder drahtlos, z.B. über eine Funkverbindung, vorzugsweise durch elektrische Leitung, oder durch optische Übermittlung oder andere Übermittlungstechnik. Beispielsweise sind die Eingabeeinrichtung und die Steuereinrichtung signalverbunden, z.B. über eine Kabeleinrichtung oder eine drahtlose Datenschnittstelle, z.B. eine Funkverbindung, so dass die vom Benutzer bewirkten Eingabesignale an die Steuereinrichtung übermittelbar sind.

Eine erfindungsgemäße Mikropositioniereinrichtung weist die erfindungsgemäße Bedienvorrichtung auf und weist ferner die Bewegungseinrichtung auf.

Die Mikropositioniereinrichtung kann Bestandteil einer erfindungsgemäßen Mikromanipulatorvorrichtung sein, die vorzugsweise einen Werkzeughalter aufweist, insbesondere einen Kapillarenhalter.

Die Eingabeeinrichtung kann eine Joystickeinrichtung sein. Diese weist einen Joystickhebel auf. Vorzugsweise ist an dessen Ende, das der Bedienvorrichtung zugewandt ist, das bewegliche Element angebracht. Das bewegliche Element kann einen Joystickhebel aufweisen oder ein Joystickhebel sein, oder kann ein Punkt oder ein Abschnitt auf dem Joystickhebel sein. Der Joystickhebel ist vorzugsweise um einen Drehpunkt schwenkbar in der Eingabeeinrichtung montiert.

Der Eingabebereich kann ein Raumwinkelbereich sein oder einen oder mehrere Raumwinkelbereiche aufweisen, in dem/denen der Joystickhebel schwenkbar ist. Die verschiedenen Eingabezonen können dann verschiedene Teilbereiche des Raumwinkelbereichs sein, also selbst auch Raumwinkelbereiche. Der Raumwinkelbereich kann z.B. durch einen ersten Winkel und einen zweiten Winkel ausreichend definiert sein. Der erste Winkel $\beta$ kann in der x-z-Ebene eines kartesischen Koordinatensystems gemessen werden und der zweite Winkel $\chi$ kann in der y-z-Ebene des Koordinatensystems gemessen werden. Dies erfolgt vorzugsweise mittels einer Sensoreinrichtung in der Eingabeeinrichtung, die mindestens einen Sensor aufweist, vorzugsweise genau oder mindestens zwei Sensoren, insbesondere Abstandssensoren aufweist. Der Sensor oder Abstandssensor ist vorzugsweise eine berührungsloser Sensor, vorzugsweise ein Hallsensor oder ein optischer Sensor. Ein optischer Sensor kann insbesondere auch als eine Lichtschrankenanordnung ausgebildete sein. Das Koordinatensystem kann so sein, dass der zu einer z-Achse rotationssymmetrisch bewegbare Joystickhebel eine Nullposition aufweist, in der der Joystick parallel zur z-Achse ausgerichtet ist. Dabei ist die x-y-Ebene senkrecht zur z-Achse. Der Drehpunkt des Joystickhebels ist vorzugsweise der Nullpunkt des Koordinatensystems.

Die Eingabeeinrichtung kann auch einen streckenförmigen oder flächenhaften, insbesondere planaren Eingabebereich haben, was z.B. bei einer Eingabeeinrichtung mit Schiebeelement oder einer berührungsempfindlichen Oberfläche der Fall ist, z.B. bei einem Touchpad oder Touchscreen, die den Positionswert z.B. mittels kapazitativ arbeitender Sensoreinrichtung erfasst. Dabei kann das bewegliche Element die Fingerspitze des Benutzers sein. Die Eingabeeinrichtung kann ferner auch einen Trackball, eine um eine oder mehrere Achsen schwenkbare Bedienwippe, oder ein entlang einer oder mehrerer Richtungen verschiebbares Schiebeelement aufweisen. Ein kommerziell erhältliches Eingabegerät kann als die Eingabeeinrichtung verwendet werden, insofern damit der Positionswert erfassbar ist und das Eingabesignal für die Steuereinrichtung erzeugbar ist.

Die Eingabeeinrichtung ist ein Bestandteil der Bedienvorrichtung. Die Eingabeeinrichtung ist vorzugsweise ein körperlicher Bestandteil der Bedienvorrichtung, und ist insbesondere an einem Basiskörper der Bedienvorrichtung und insbesondere zumindest teilweise innerhalb einer die Steuereinrichtung aufweisenden Gehäuseeinrichtung der Bedienvorrichtung angeordnet. Die Eingabeeinrichtung kann aber auch außerhalb einer die Steuereinrichtung aufweisenden Gehäuseeinrichtung der Bedienvorrichtung angeordnet sein, insofern die Eingabeeinrichtung mit der Steuereinrichtung signalverbunden ist, um das Eingabesignal an die Steuereinrichtung weiterzugeben.

Der Joystickhebel ist vorzugsweise kardanisch aufgehängt, so dass er rotationssymmetrisch zur z-Achse schwenkbar ist. Dazu weist die kardanische Aufhängung zwei zueinander senkrechte Schwenkachsen auf, die parallel zur x- und y-Achse sein können. Der Joystickhebel weist vorzugsweise einen Auslegerabschnitt auf, der am unteren Ende des Joystickhebels angeordnet ist, also in Richtung des unteren Halbraums des Koordinatensystems weist, somit in den Bereich der Punkte mit negativen z-Werten weist. Zur Erfassung der Position zweier Raumwinkel sind vorzugsweise mindestens zwei Sensoren in einem Abstand zueinander angeordnet, vorzugsweise im unteren Bereich des Halbraums. Ein erster Sensor kann unterhalb des Auslegerabschnitts auf der z-Achse angeordnet sein, ein zweiter Sensor kann versetzt zur z-Achse angeordnet sein, vorzugsweise in Höhe des Drehpunkts oder darunter.

Der Joystickhebel kann am Auslegerabschnitt, insbesondere am unteren Ende des Auslegerabschnitts, ein Wechselwirkungselement aufweisen, das mit einem Sensor wechselwirkt, um einen Positionswert zu ermitteln. Ein Wechselwirkungselement kann ferner an der kardanischen Aufhängung angeordnet und/oder befestigt sein. Das Wechselwirkungselement kann ein Magnetelement sein, insbesondere einen Permanentmagneten aufweisen. Dessen Abstand zu einem Hallsensor ist durch diesen bestimmbar, so dass z.B. ein Raumwinkel erfasst werden kann. Das Wechselwirkungselement kann auch ein Sender oder Reflektor sein, oder eine Blendeneinrichtung aufweisen, um z.B. für eine optische Lichtschranke zu dienen.

Vorzugsweise weist die Bedienvorrichtung eine Sensoreinrichtung auf. Vorzugsweise ist diese Bestandteil der Eingabeeinrichtung. Diese weist vorzugsweise eine Anzahl N_sens von Sensoren auf, welche zur Erfassung der Position bzw. Positionsänderung geeignet sind, wobei N_sens >= 1. Vorzugsweise ist N_sens=2, da dies besonders geeignet und kostengünstig ist, um die bevorzugte Erfassung von zwei Ortsparametern, z.B. zwei Winkeln oder zwei Strecken zu ermöglichen. Bei einer eindimensionalen Bewegung des beweglichen Elements wird vorzugsweise ein Sensor verwendet, bei einer zweidimensionalen Bewegung werden vorzugsweise zwei Sensoren verwendet, bei einer dreidimensionalen Bewegung werden vorzugsweise drei Sensoren verwendet. Vorzugsweise werden jeweils die doppelte Anzahl Sensoren verwendet, um eine bessere Genauigkeit zu erreichen.

Ein Sensor ist vorzugsweise ein berührungsloser Sensor, vorzugsweise ein Abstandssensor. Vorzugsweise ist der Sensor ein Hall-Sensor. Ferner kann der Sensor ein optischer Sensor sein, und kann z.B. mindestens eine LED aufweisen, die im sichtbaren Spektrum oder im Infrarotspektrum emittieren kann. Eine optische Sensoreinrichtung kann eine Lichtschrankeneinrichtung aufweisen, um den Positionswert zu erfassen.

Ein Sensor kann aber auch ein berührendes Wirkprinzip haben, und kann z.B. ein Potentiometer aufweisen.

Vorzugsweise weist die Bedienvorrichtung eine Signaleinrichtung auf, die dazu ausgebildet ist, dem Benutzer den Wechsel zu signalisieren, wenn das bewegliche Element seine Position zwischen zwei Eingabezonen wechselt. Dadurch wird die Steuerung einer Bewegung einer Bewegungseinrichtung komfortabler oder sogar intuitiv.

Vorzugsweise ist die Signaleinrichtung dazu ausgebildet ist, dem Benutzer ein haptisches und/oder optisches und/oder akustisches Signal zu geben, wenn dieser Wechsel zwischen zwei verschiedenen Eingabezonen erfolgt. Die haptische Wahrnehmung kann insbesondere die Wahrnehmung einer Gegenkraft, insbesondere einer erhöhten Gegenkraft sein.

Vorzugsweise ist die Signaleinrichtung dazu ausgebildet ist, dem Benutzer das haptische Signal zu geben, wenn der Wechsel zwischen einer Totzone und der zweiten Eingabezone erfolgt. Insbesondere, wenn die erste Eingabezone der Proportionalsteuerung und die zweite Eingabezone der dynamischen Steuerung dient, wird der Benutzer beim Eintritt in den "schnellen Bewegungsmodus" gemäß der dynamischen Steuerung informiert bzw. gewarnt.

Vorzugsweise ist eine Einrichtung zur Kraftrückkopplung vorgesehen, die dazu ausgebildet ist, dem Benutzer in Abhängigkeit von der Position und Bewegungsrichtung des beweglichen Elementes eine veränderliche Gegenkraft entgegenzusetzen, wenn dieser die Position des beweglichen Elements ändert. Dieses als "Force-Feedback" bekannte Prinzip ermöglicht eine intuitive Steuerung, bei der ein zu steuernder Parameter auch den Betrag der Rückkopplungskraft bestimmt. Dieser zu steuernde Parameter kann z.B. die Relativposition des beweglichen Elements innerhalb eines zweiten Eingabebereichs sein, die vorzugsweise proportional zur Geschwindigkeit eines Antriebs der Bewegungseinrichtung ist. Dadurch wird diese Steuerung intuitiv. Die Einrichtung zur Kraftrückkopplung kann ein Kulissenelement aufweisen, das eine Aussparung aufweisen kann.

Vorzugsweise dient die Einrichtung zur Kraftrückkopplung als diese Signaleinrichtung, die ein haptisches Signal erzeugt, das dem Benutzer den Zonenwechsel signalisiert.

Vorzugsweise dient die Einrichtung zur Kraftrückkopplung auch als Rückstelleinrichtung, um das bewegliche Element mittels der Gegenkraft in eine Ausgangsposition zurückzustellen. Dazu weist die Eingabeeinrichtung vorzugsweise eine Federeinrichtung auf, die diese Rückstellung bewirkt.

Vorzugsweise weist die Einrichtung zur Kraftrückkopplung ein um das bewegliche Element mittels der Federeinrichtung beweglich gefedert gelagertes Kulissenelement auf.

Das Kulissenelement ist vorzugsweise plattenförmig, insbesondere scheibenförmig, insbesondere kreisringförmig. Es weist vorzugsweise eine als Kulisse dienende Aussparung auf. Dabei ist die Innenseite des Kulissenelements, welche die Aussparung gegrenzt, insbesondere eine Innenrand des Kulissenelements, als Führungsbahn und/oder Gleitbahn für das bewegliche Element und/oder für ein vorzugsweise vorgesehenes Bedienelement der Bedienvorrichtung ausgebildet, wenn das bewegliche Element oder das Bedienelement diese Innenseite kontaktiert. Das Kulissenelement ist gegenüber der Eingabeeinrichtung beweglich gelagert und wird insbesondere aus einer Nullstellung ausgelenkt, wenn das bewegliche Element eine Kraft auf diese Innenseite ausübt.

Die Außenkontur der Aussparung des Kulissenelements weist vorzugsweise die gleiche Form und/oder Größe auf wie die Kontur, die den Übergang von der ersten Eingabezone in die zweite Eingabezone oder von der dritten Eingabezone in die zweite Eingabezone bildet, die also jedenfalls eine Zonengrenze bildet. Dadurch kann die Änderung der Steuerungsregel an die Signalgebung durch die Signaleinrichtung und/oder die Kraftrückkopplung und oder die Rückstellfunktion gekoppelt werden. Insbesondere kann das Signal, die Kraftrücckopplung oder die Rückstellung genau dann einsetzen bzw. enden, wenn der Benutzer das bewegliche Element über die besagte Zonengrenze bewegt. Vollzieht der Benutzer also z.B. den Wechsel zwischen der Proportionalzone (oder der Totzone) in die dynamische Zone, so wird er z.B. mit dem Bedienhebel des Joysticks an die Kulisseninnenseite stoßen, wodurch ihm der Übergang signalisiert wird. Mit weiterer Auslenkung in die dynamische Zone, was gleichbedeutend mit der Zunahme der Antriebsgeschwindigkeit in der Bewegungseinrichtung ist, nimmt der Benutzer die Kraft durch die Federeinrichtung war, die der Kraft entgegengesetzt ist, mit der der Benutzer den Hebel auslenkt. Ist die Geschwindigkeit des Antriebs im wesentlichen proportional zur durch die Federeinrichtung bewirkten Gegenkraft, so ist die KraftRücckopplung besonders informativ und führt zu einer intuitiveren Steuerung der Bedienvorrichtung. Die Kontur der Zonengrenze und die Außenkontur können aber auch anders geformt sein.

Das gefederte Kulissenelement weist vorzugsweise eine definierte Nullstellung auf, das durch das Gleichgewicht der Federelemente der Federeinrichtung definiert ist. Vorzugsweise ist die Federeinrichtung mittels Justiermittel justierbar, um die Nullstellung zu justieren. Vorzugsweise führt in der Nullstellung die z-Achse, die durch den Drehpunkt des Joystickhebels führt, durch das geometrische Zentrum der Aussparung des Kulissenelements. Der Joystickhebel ist in seiner Nullstellung vorzugsweise parallel zur z-Achse, insbesondere so, dass die z-Achse mit der zentralen Achse durch den Joystickhebel übereinstimmt. Der Joystickhebel ist vorzugsweise so befestigt, dass er seine Position innerhalb der Eingabezone nicht ändert, insofern er nicht vom Benutzer oder einer Rückstelleinrichtung verschoben wird.

Die Eingabeeinrichtung kann so ausgebildet sein, dass das Kulissenelement austauschbar ist. Die Bedienvorrichtung kann so ausgebildet sein, dass die Kontur der Zonengrenze vom Benutzer wählbar ist, insbesondere an die Außenkontur der Aussparung des Kulissenelements anpassbar ist. Dadurch wird die Verwendung der Bedienvorrichtung flexibler.

Die Außenkontur der Aussparung des Kulissenelements und die Kontur der Zonengrenze sind vorzugsweise jeweils kreisförmig. Dadurch ist die Bedienvorrichtung besonders intuitiv bedienbar, da keine Vorzugsrichtung existiert. Die Außenkontur und die Kontur der Zonengrenze können aber auch andere Formen aufweisen, für die in den Figuren 6a und 6b einige Beispiele gezeigt sind. Eine Form der Kontur, die einen nach innen gezogenen Bereich aufweist, also teilweise herzförmig, wie z.B. in Fig. 6b gezeigt ist, kann für bestimmte Applikationen der Bedienvorrichtung vorteilhaft sein. So ist es z.B. möglich, bei der Zellmanipulation, insbesondere beim ICSI, die Kapillare mittels der Bewegungseinrichtung durch eine relativ kleine, in Pfeilrichtung A gerichtet Auslenkung des Joystickhebels bzw. des beweglichen Elementes mit Dynamiksteuerung schnell zu verfahren, und dann in Pfeilrichtung B eine Bewegung mittels Proportionalsteuerung durchzuführen.

Vorzugsweise bewirkt die erste Steuerungsregel eine Proportionalsteuerung der Bewegung des bewegten Elements der Bewegungseinrichtung in Abhängigkeit vom Positionswert. Vorzugsweise bewirkt die zweite Steuerungsregel eine Dynamiksteuerung der Bewegung des bewegten Elements der Bewegungseinrichtung in Abhängigkeit vom Positionswert.

In einer besonders bevorzugen Ausführungsform weist der Eingabebereich eine Totzone auf, die zwischen der ersten und der zweiten Eingabezone liegt, und die erste Steuerungsregel bewirkt eine Proportionalsteuerung der Bewegung des bewegten Elements der Bewegungseinrichtung in Abhängigkeit vom Positionswert und die zweite Steuerungsregel bewirkt eine Dynamiksteuerung der Bewegung des bewegten Elements der Bewegungseinrichtung in Abhängigkeit vom Positionswert. Bei dieser Konfiguration wird eine intuitive Bedienung der Bedienvorrichtung erreicht. Der Benutzer kann das bewegte Element im Dynamikmodus schnell verfahren, und kann mittels Totzone zuverlässig in den Proportionalitätsmodus wechseln, um eine Feineinstellung der Position des bewegten Elements der Bewegungseinrichtung vorzunehmen.

Die Erfindung betrifft ferner ein Verfahren zur Erzeugung eines Ausgabesignals zur Steuerung der Bewegungseinrichtung, insbesondere der Bewegungseinrichtung eines Mikromanipulators zur Manipulation von biologischen Zellen, wobei mittels der Eingabeeinrichtung einer Bedienvorrichtung ein elektrisches Signal erzeugt wird, das als Eingabesignal für eine elektrische Steuereinrichtung dient, wobei durch die elektrische Steuereinrichtung in Abhängigkeit vom Eingabesignal ein Ausgabesignal generiert wird, mit dem die Bewegung einer Bewegungseinrichtung steuerbar ist, wobei dieser Eingabebereich eine erste Eingabezone aufweist, und wobei das Ausgabesignal von der Steuereinrichtung gemäß einer ersten Steuerungsregel in Abhängigkeit vom Eingabesignal erzeugt wird, wenn das bewegliche Element in der ersten Eingabezone angeordnet ist, und wobei der Eingabebereich eine zweite Eingabezone aufweist, und wobei das Ausgabesignal von der Steuereinrichtung gemäß einer zweiten Steuerungsregel in Abhängigkeit vom Eingabesignal erzeugt wird, wenn das bewegliche Element in der zweiten Eingabezone angeordnet ist.

Die Erfindung betrifft ferner Computerdaten, die zu, insbesondere einen ausführbaren Programmcode, der die Schritte des erfindungsgemäßen Verfahrens durchführt. Die Erfindung betrifft ferner einen Datenträger, z.B. eine Compact Disc oder einen Flash-Speicher, der die Computerdaten aufweist, insbesondere ausführbaren Programmcode, welche die Ausführung des erfindungsgemäßen Verfahrens in einer elektrischen Steuereinrichtung ermöglichen.

Weitere bevorzugte Ausgestaltungen des erfindungsgemäßen Verfahrens ergeben sich aus der Beschreibung der erfindungsgemäßen Bedienvorrichtung.

Weitere bevorzugte Ausgestaltungen der erfindungsgemäßen Bedienvorrichtung und des erfindungsgemäßen Verfahrens ergeben sich aus der nachfolgenden Beschreibung der Ausführungsbeispiele in Zusammenhang mit den Figuren und deren Beschreibung. Gleiche Bauteile der Ausführungsbeispiele werden im Wesentlichen durch gleiche Bezugszeichen gekennzeichnet, falls dies nicht anders beschrieben wird oder sich nicht anders aus dem Kontext ergibt. Es zeigen:

Fig. 1a zeigt schematisch ein Ausführungsbeispiel der erfindungsgemäßen Bedienvorrichtung sowie eine mit ihr gesteuerte Bewegungseinrichtung.

Fig. 1b zeigt einen zellbiologischen Arbeitsplatz, der verschiedene Geräte und die Bedienvorrichtung aus Fig. 1a aufweist.

Fig. 2a zeigt schematisch einen Abschnitt der Eingabeeinrichtung gemäß eines Ausführungsbeispiels der erfindungsgemäßen Bedienvorrichtung mit einem Teil des Kulissenelements sowie das bewegliche Element, und den Eingabebereich.

Fig. 2b zeigt schematisch den Eingabebereich mit erster und zweiter Eingabezone, sowie Totzone, sowie das bewegliche Element, gemäß eines Ausführungsbeispiels der erfindungsgemäßen Bedienvorrichtung.

Fig. 2c zeigt den Eingabebereich aus Fig. 2a und 2b, mit Bewegung des beweglichen Elements in der ersten Zone.

Fig. 2d zeigt den Eingabebereich aus Fig. 2c, mit Bewegung des beweglichen Elements aus der ersten Zone in die Totzone.

Fig. 2e zeigt den Eingabebereich aus Fig. 2d, mit Position des beweglichen Elements in der Totzone.

Fig. 2f zeigt den Eingabebereich aus Fig. 2e, überlagert dazu die Eingabeeinrichtung mit dem Kulissenelement in Nullstellung.

Fig. 2g zeigt den Eingabebereich aus Fig. 2e und 2f, mit Bewegung des beweglichen Elements aus der Totzone in die zweite Zone.

Fig. 2h zeigt den Eingabebereich aus Fig. 2g, überlagert dazu die Eingabeeinrichtung mit dem Kulissenelement in ausgelenkter Stellung.

Fig. 3a zeigt eine perspektivische Ansicht der Eingabeeinrichtung gemäß einem Ausführungsbeispiel der erfindungsgemäßen Bedienvorrichtung.

Fig. 3b zeigt eine schematische Seitenansicht der Eingabeeinrichtung aus Fig. 3a, mit Eingabebereich.

Fig. 3c zeigt eine schematische Seitenansicht des Eingabebereichs aus Fig. 3b, mit erster, zweiter und dritter Eingabezone sowie dem Kulissenelement.

Fig. 4a zeigt links den Eingabebereich, dazu überlagert die durch eine erfindungsgemäße Bedienvorrichtung im Proportionalmodus erzeugte Bewegung des bewegten Elements, und zeigt rechts die maximalen Auslenkungsmöglichkeit des Bedienhebels der Eingabeeinrichtung der Bedienvorrichtung.

Fig. 4b zeigt links den Eingabebereich, dazu überlagert die durch eine erfindungsgemäße Bedienvorrichtung erzeugte Bewegung des bewegten Elements mit Wechsel vom Proportionalmodus in den Dynamikmodus, und zeigt rechts die entsprechende Auslenkung des Bedienhebels der Eingabeeinrichtung der Bedienvorrichtung.

Fig. 4c zeigt links den Eingabebereich, dazu überlagert die durch eine erfindungsgemäße Bedienvorrichtung im Dynamikmodus erzeugte Bewegung des bewegten Elements, und zeigt rechts die Auslenkung des Bedienhebels der Eingabeeinrichtung der Bedienvorrichtung.

Fig. 5a zeigt schematisch Verfahrensschritte gemäß einem Ausführungsbeispiel des erfindungsgemäßen Verfahrens.

Fig. 5b zeigt schematisch Verfahrensschritte gemäß der Dynamiksteuerung des Verfahrens in Fig. 5a.

Fig. 5a zeigt schematisch Verfahrensschritte gemäß einem Ausführungsbeispiel des erfindungsgemäßen Verfahrens.

Fig. 5c zeigt schematisch Verfahrensschritte gemäß der Proportionalsteuerung des Verfahrens in Fig. 5a.

Fig. 6a und Fig. 6b zeigen Beispiele für die Zonengrenze und für die Außenkontur der Aussparung eines Kulissenelements einer erfindungsgemäßen Bedienvorrichtung.

Fig. 1 zeigt schematisch die Bedienvorrichtung 1. Die Bedienvorrichtung ist eine Laborvorrichtung zur Steuerung der Bewegungseinrichtung 10 einer Mikropositioniereinrichtung. Diese weist ferner einen mit der Bewegungseinrichtung verbundenen Kapillarenhalter auf. An ihm ist eine Kapillare befestigt, die als Werkzeug zur Manipulation von lebenden Zellen dient. Die Mikropositioniereinrichtung ist in der Weise als Mikromanipulatorvorrichtung ausgebildet. Die Bewegungen der Kapillare 51 (siehe Fig. 4a, 4b, 4c) im Bereich von Millimetern bis Mikrometern, die vom Operator mittels der Bedienvorrichtung 1 erzeugt werden, lassen sich über ein invertiertes Mikroskop in verschiedenen Auflösungen beobachten. Die erfindungsgemäße Bedienvorrichtung erlaubt insbesondere das intuitive einhändige Steuern der Bewegung, so dass eine Hand des Operators zur Bedienung des Mikroskops frei bleibt.

Fig. 1b zeigt einen zellbiologischen Arbeitsplatz 100, der verschiedene Geräte und die Bedienvorrichtung 1 aufweist. Der Arbeitsplatz umfasst ein Mikroskop 101, den als Kapillarenhalter 106 ausgebildeten piezoelektrischen Mikroaktuator 106 mit seiner elektrischen Steuerung 111, und die Mikropositioniereinrichtung (1, 10), die die Bedienvorrichtung 1 und die über eine Kabeleinrichtung 121 mit ihr verbundene Bewegungseinrichtung 10 aufweist, die als bewegtes Element 11 eine Haltevorrichtung 11 zum Halten des Werkzeughalters, hier des Kapillarenhalters 106 mit Kapillare 107, aufweist. Die Bewegungseinrichtung 10 weist drei Schrittmotoren (nicht gezeigt) auf, durch die das bewegte Element 11 entlang der drei Achsen x', y', z', eines kartesischen Koordinatensystems bewegbar ist, gesteuert vom Ausgabesignal der Bedienvorrichtung 1 in Abhängigkeit der vom Benutzer bewirkten Positionsänderung x, y, die dem Kopf des Joystickhebels 25 zugeordnet werden kann. Die Bedienvorrichtung kann über ein Drehrad des Joystickhebelkopfs insbesondere auch in z-Richtung gesteuert werden. Die Geräte sind auf einem Labortisch 110 angeordnet.

Der Operator dieses Arbeitsplatzes platziert bei einer typischen Anwendung, z.B. der Durchführung von ICSI, z.B. eine Petrischale mit einer Zelle auf der Arbeitplatte 102 des -hier invertierten- Mikroskops 101, bringt dann die über einen Schlitten 103 manuell verfahrbare Bewegungseinrichtung 10 in die Nähe der Petrischale, bewegt dann manuell den Kapillarenhalter 106 mit Kapillare 107 relativ schnell in Richtung der Petrischale, insbesondere bis diese in das in der Petrischale enthaltene Nährmedium eintaucht. Er beobachtet nun unter dem Mikroskop das Eintauchen der Kapillare, die er durch stärkere Auslenkung des Joysticks noch relativ schnell in Richtung der Zelle fahren kann, wobei die Bedienvorrichtung automatisch die Steuerungsregel zur Dynamiksteuerung anwendet. Mit einer Hand justiert er über das Fokussierrad 104 des Mikroskops den optischen Fokus zwischen Kapillarenspitze und Zelle, um den Abstand der Kapillarenspitze vom Zielpunkt an der Zelle zu beobachten. In der Nähe der Zelle erfolgt durch geringere Auslenkung des Joysticks die Feinsteuerung im Bereich von hier 50 nm bis 15 $\mu$m, wobei die Bedienvorrichtung automatisch die Steuerungsregel zur Proportionalsteuerung anwendet. Den Proportionalitätsfaktor c bei der Untersetzung der Bedienbewegung x, y kann der Benutzer an der Bedienvorrichtung eingeben. Bei dieser Anwendung ist von Vorteil, das die Steuerung der Bewegungseinrichtung 10 mittels der Bedienvorrichtung 1 intuitiv und komfortabel erfolgt, wie nachfolgend noch ausgeführt wird.

Die Bedienvorrichtung 1 weist eine Eingabeeinrichturn 2 auf, die vorliegend eine Joystickeinrichtung 2 ist. Von dieser wird der Positionswert des innerhalb des Eingabebereichs bewegten Joystickhebels erfasst, der das bewegliche Element bildet. Der Positionswert beinhaltet vorliegend die Position des Joystickhebels, die durch zwei gemessene Winkel definiert ist, was noch erläutert wird. Die Joystickeinrichtung 2 erzeugt ein elektrisches Signal, das den Positionswert enthält. Das elektrische Signal dient als Eingabesignal 31 für die Steuereinrichtung 3. In Abhängigkeit von der Position des Joystickhebels erzeugt die Steuereinrichtung 3 gemäß einer ersten Steuerungsregel 33 ein Ausgangssignal, wenn der Joystickhebel im ersten Eingabebereich angeordnet ist. In Abhängigkeit von der Position des Joystickhebels erzeugt die Steuereinrichtung 3 gemäß einer zweiten Steuerungsregel 34 ein Ausgangssignal, wenn der Joystickhebel im zweiten Eingabebereich angeordnet ist.

Der Eingabebereich 4 ist, wie in Fig. 3b und 3c gezeigt ist, vorliegend ein doppelkegelförmiger Raumwinkelbereich mit zwei kegelförmigen Raumwinkelbereichen, die sich ausgehend vom Drehpunkt 25e des Joystickhebels nach oben und unten erstreckt, in Richtung der positiven und negativen z-Achse eines kartesischen Koordinatensystems und die einen ersten Öffnungswinkel $\alpha 1$ aufweisen. Ferner gibt es die Zonengrenze 43a, die durch die Außenfläche von zwei kegelförmigen Raumwinkelbereichen mit kleinerem Öffnungswinkel $\alpha 2$ gebildet werden und die Zonengrenze 41 a, die durch die Außenfläche von zwei kegelförmigen Raumwinkelbereichen mit noch kleinerem Öffnungswinkel $\alpha 3$ gebildet werden, also $\alpha 1 > \alpha 2 > \alpha 3$. Innerhalb der Zonengrenze 41a liegt die erste Eingabezone; zwischen der Zonengrenze 41a und der der Zonengrenze 43a liegt die dritte Eingabezone; und zwischen der Zonengrenze 43a und der Außenfläche des Eingabebereichs 4 liegt die zweite Eingabezone. Betrachtet man das bewegliche Element als die Achse des Joystickhebels, und den Drehpunkt 25e als mathematischen Punkt, so bewegt sich die Joystickachse immer innerhalb der genannten Zonen oder auf den Zonengrenzen. Der Joystickhebel selbst ragt dabei mit seinem Volumen über die Zonengrenzen hinaus.

Wie in Fig. 3a und Fig. 3c gezeigt ist, ist oberhalb des Drehpunktes 25e und im Abstand von z.B. etwa 1 bis 3 cm das gefedert gelagerte Kulissenelement 26 angeordnet parallel zur x-y Ebone. Es ist mittels dreier äquiäisiant angeordneter Spiralfederelemente an einem Rahmenelement 22 gefedert gelagert. Die Spiralfederelemente sind konzentrisch um eine Gerade durch den Drehpunkt 25e parallel zur z-Achse verteilt. Die Federelemente sind mittels Justiermitteln 22a justierbar, die am Rahmenelement 22 befestigt sind. Jedes Federelement ist vorliegend mit einem Justiermittel verbunden. Das Justiermittel erlaubt das Spannen oder Entspannen eines Federelements.

Das Kulissenelement ist in der Nullstellung so angeordnet, dass die Gerade durch den Drehpunkt 25e parallel zur z-Achse genau durch das Zentrum der hier kreisförmigen Aussparung 26a verläuft. Die Innenseite der Aussparung 26a und die zweite Eingabezone sind generell vorzugsweise genau so geformt, dass das bewegliche Element 25, hier der Joystickhebel oder dessen Joystickachse, genau auf der Zonengrenze 43a zur zweiten Eingabezone liegt, wenn das bewegliche Element die Innenseite der Aussparung gerade eben berührt, ohne das Kulissenelement aus seiner Nullstellung auszulenken. Das gilt auch dann, wenn die Innenseite eine nichtkreisförmige Kontur aufweist, wie sie in Fig. 6a und Fig. 6b gezeigt ist.

In den Figuren 2a bis 2h ist der Eingabebereich 4 mit erster Eingabezone 41, dritter Eingabezone 43 = Totzone und zweiter Eingabezone 42 in Höhe H des Kulissenelements in Fig. 3c gezeigt.

Fig. 2a zeigt schematisch einen Abschnitt der Eingabeeinrichtung 2 der Bedienvorrichtung 2 mit einem Teil des Kulissenelements 26 sowie das bewegliche Element 5 (=Hebel 25), und den Eingabebereich 4. Fig. 2b zeigt schematisch den Eingabebereich mit erster Eingabezone 41 und zweiter Eingabezone 42, sowie Totzone 43, sowie das bewegliche Element 5. Das bewegliche Element 5 ist in der ersten Eingabezone angeordnet. Diese ist in der Steuereinrichtung 3 mit einer Steuerungsregel 33 zur Proportionalsteuerung der Bewegungseinrichtung verknüpft, so dass Proportionalsteuerung erfolgt, wenn das bewegliche Element in der ersten Eingabezone 41 angeordnet ist. Das bewegliche Element 5 ist in Fig. 2b nicht in Bewegung, so dass keine Bewegung der Bewegungseinrichtung bewirkt wird. Die Steuereinrichtung 3 erkennt, in welcher Eingabezone das bewegliche Element angeordnet ist und wählt entsprechend die mit der Eingabezone verknüpfte Steuerungsregel aus.

Fig. 2c zeigt den Eingabebereich aus Fig. 2a und 2b, mit Bewegung des beweglichen Elements in der ersten Zone. Es erfolgt eine Positionsänderung dP2 der Bewegungseinrichtung, die proportional der Positionsänderung dP1 des beweglichen Elements 5 ist, d.h. dP2 ~ dP1 oder dP2 = c * dP1, wobei c eine Zahl kleiner als 1 ist. D.h. die Bewegung wird untersetzt, wodurch die Feinsteuerung ermöglicht wird. Der Faktor c kann vom Benutzer an der Bedienvorrichtung eingestellt werden, z.B. zwischen $10^{-5}$ und 1.

Fig. 2d zeigt den Eingabebereich aus Fig. 2c, mit Bewegung des beweglichen Elements aus der ersten Zone in die Totzone. Bei Bewegung oder Positionierung des beweglichen Elements in der Totzone wird die entsprechende Steuerungsregel angewandt. Demnach wird keine Bewegung der Bewegungseinrichtung erzeugt, wenn das bewegliche Element in der Totzone angeordnet ist. Fig. 2e zeigt den Eingabebereich aus Fig. 2d, mit Position des beweglichen Elements in der Totzone. Fig. 2f zeigt den Eingabebereich aus Fig. 2e, überlagert dazu die Eingabeeinrichtung mit dem Kulissenelement in Nullstellung.

Fig. 2g zeigt den Eingabebereich aus Fig. 2e und 2f, mit Bewegung des beweglichen Elements aus der Totzone 43 in die zweite Zone 42. Das bewegliche Element 5 ist dann in der zweiten Eingabezone angeordnet. Diese ist in der Steuereinrichtung 3 mit einer Steuerungsregel 34 zur Dynamiksteuerung der Bewegungseinrichtung verknüpft, so dass Dynamiksteuerung erfolgt, wenn das bewegliche Element in der zweiten Eingabezone 42 angeordnet ist. Das bedeutet, dass die von der Bewegungseinrichtung eingehaltene Geschwindigkeit v abhängig von der vom beweglichen Element eingenommenen Relativposition P_rel ist, die in Fig. 2g ausgehend von der Zonengrenze 43a zwischen dritter 43 und zweiter 42 Eingabezone in Richtung radial auswärts gemessen wird. Das heisst, vorzugsweise ist v eine Funktion von P_rel, also v = v(P_rel).

Fig. 2h zeigt den Eingabebereich aus Fig. 2g, überlagert dazu die Eingabeeinrichtung mit dem Kulissenelement 26 in ausgelenkter Stellung. Die Auslenkung erfolgt gegen die Kraft der Federeinrichtung 24. Die Federeinrichtung mit dem Kulissenelement erfüllt drei Funktionen, die jeweils auch anders realisiert werden können Durch die Auslenkung wird eine Gegenkraft erzeugt, die der vom Benutzer aufgebrachten Ausienkungskraft entgegengesetzt ist. Dadurch wird dem Benutzer haptisch der Übergang von der dritten in die zweite Eingabezone signalisiert. Ferner wird bei Positionsänderung des beweglichen Elements innerhalb der zweiten Eingabezone eine Kraftrückkopplung erzeugt, d.h. die vom Benutzer aufzubringende Kraft ändert sich mit der P_rel. Der Benutzer erhält somit eine haptische Information über den Betrag der Geschwindigkeit v, die an der Bewegungseinrichtung anliegt. Als dritte Funktion bewirkt die Federeinrichtung mit dem Kulissenelement, dass das bewegliche Element, d.h. der Joystickhebel 25, in die Totzone zurückbewegt wird, sobald der Benutzer den Hebel loslässt. Dadurch wird die Bedienung sicher und ist zudem intuitiv.

Fig. 4a zeigt links den Eingabebereich 4', dazu überlagert die durch eine erfindungsgemäße Bedienvorrichtung im Proportionalmodus erzeugte Bewegung des bewegten Elements bzw. Werkzeug oder Kapillare 51, und zeigt rechts die maximalen Auslenkungsmöglichkeit des Bedienhebels 25 der Eingabeeinrichtung der Bedienvorrichtung. Fig. 4b zeigt links den kreisförmigen Eingabebereich mit erster kreisförmiger Eingabezone 41' mit Außenradius r1, und mit zweiter Eingabezone 42' mit zweitem Außenradius r2>r1, dazu überlagert die durch eine erfindungsgemäße Bedienvorrichtung erzeugte Bewegung des bewegten Elements mit Wechsel vom Proportionalmodus in den Dynamikmodus, und zeigt rechts die entsprechende Auslenkung des Bedienhebels der Eingabeeinrichtung der Bedienvorrichtung. Fig. 4c zeigt links den Eingabebereich, dazu überlagert die durch eine erfindungsgemäße Bedienvorrichtung im Dynamikmodus erzeugte Bewegung des bewegten Elements, und zeigt rechts die Auslenkung des Bedienhebels der Eingabeeinrichtung der Bedienvorrichtung, der durch das gefederte Kulissenelement eine Gegenkraft erfährt.

Fig. 3a zeigt eine perspektivische Ansicht der Eingabeeinrichtung 2 gemäß der Bedienvorrichtung 1. Das Rahmenelement 22 ist auf einem hohlzylindrischen Sockelelement 21 befestigt. Im Sockelelement 21 ist der Joystickhebel 25 kardanisch aufgehängt, schwenkbar um den Drehpunkt 25e (Fig. 3b). Der Joystickhebel ist so aufgehängt, dass er nicht gravitationsbedingt ausgelenkt wird, wenn er innerhalb der ersten Eingabezone 41 angeordnet ist.

Der Joystickhebel weist einen Hebelkopf 27 auf. Dieses hat vorliegend ein Drehrad 27a, dessen Position durch eine Messeinrichtung des Hebelkopfs erfasst und mit dem Positionswert über die Kabeleinrichtung 28 an die Steuereinrichtung 3 übermittelt werden kann. Die Steuereinrichtung kann dem Drehrad nach Wahl des Benutzers eine gewünschte Funktion zuordnen oder eine feste Funktion aufweisen. Typischer Weise wird eine z-Bewegung, also eine Höhe, der Bewegungseinrichtung mit dem Drehrad gesteuert. Der Hebelkopf 27 weist vorliegend ferner den Druckknopf 27b auf. Dessen Stellung (gedrückt/nicht gedrückt) kann durch eine Messeinrichtung des Hebelkopfs erfasst und mit dem Positionswert über die Kabeleinrichtung 28 an die Steuereinrichtung 3 übermittelt werden kann.

Die Steuereinrichtung kann dem Druckknopf 27b nach Wahl des Benutzers eine gewünschte Funktion zuordnen oder eine feste Funktion aufweisen. Eine typische Funktion ist z.B. die Totfunktion, die der Steuerungsregel der Totzone entspricht, d.h. es wird auch bei Bewegung des beweglichen Elements in einer beliebigen Eingabezone keine Bewegung auf die Bewegungseinrichtung übertragen, solange der Druckknopf 27b gedrückt ist. Dadurch wird ein Nachfassen des Joysticks innerhalb der Proportionalitätzone 41 ermöglicht und ferner ein sofortiger Stop der Bewegung, wenn das bewegliche Element in der Danymikzone 42 angeordnet ist. Insbesondere der Druckknopf 27b und das Drehrad 27a sind jedoch optional.

Fig. 3b zeigt eine schematische Seitenansicht der Eingabeeinrichtung 2 aus Fig. 3a, mit Eingabebereich 4. Die Eingabeeinrichtung 2 weist eine Sensoreinrichtung auf, mit vorliegend zwei Hallsensoren 29 (nur einer ist gezeigt). Durch die Sensoreinrichtung ist die Position des Joysticks eindeutig erfassbar. Der unterste Endabschnitt des Joystickhebels 25 weist den Permanentmagneten 25d auf, dessen Abstand vom Hallsensor 29 durch den Hallsensor 29 erfasst werden kann. Dadurch ist der Raumwinkel $\alpha 1$ erfassbar, der in der x-z-Ebene des kartesischen Koordinatensystems gemessen wird. Ein zweiter Hallsensor (nicht gezeigt) ist am Ausleger 25c der kardanischen Aufhängung des Joystickhebels 25 befestigt. Dadurch ist der Raumwinkel $\alpha 2$ erfassbar, der in der y-z-Fbene des kartesischen Koordinatensystems gemessen wird. Die Hallsensoren geben Signale aus, die die Raumwinkel $\alpha 1$ und $\alpha 2$ repräsentieren. Die Eingabeeinrichtung rechnet die Raumwinkelwerte in virtuelle x-y-Werte der Eingabeeinrichtung um. Diese bestimmen, multipliziert mit dem gewünschten Faktor c<1, innerhalb der ersten Eingabezone 41 die Positionsänderung dP2 (also dX2 und dY2) der Bewegungseinrichtung gemäß Proportionalsteuerung und innerhalb der zweiten Eingabezone 42 die Geschwindigkeit v=v(P_rel) der Bewegungseinrichtung gemäß Dynamiksteuerung.

Die Steuereinrichtung weist einen programmierbaren Mikroprozessor auf, der einen ausführbaren Programmcode verarbeitet, um das Ausgangssignal 32 zu erzeugen. Der Programmcode ist in einem Programmspeicher der Steuereinrichtung permanent gespeichert. Der Programmcode entscheidet anhand des Eingabesignals, das er regelmäßig wiederholt erfasst, vorzugsweise alle 10 ms, in welcher Eingabezone das bewegliche Element 5 (25) angeordnet ist. Abhängig vom Ergebnis wendet er eine erste Steuerungsregel an, um ein Ausgangssignal zu erzeugen, mit dem eine Proportionalsteuerung der Bewegungseinrichtung erfolgt. Oder er wendet er eine zweite Steuerungsregel an, um ein Ausgangssignal zu erzeugen, mit dem eine Dynamiksteuerung der Bewegungseinrichtung erfolgt. Oder er wendet er eine dritte Steuerungsregel an, um ein Ausgangssignal zu erzeugen, mit dem keine Positionsänderung der Bewegungseinrichtung erfolgt.

Fig. 5a zeigt schematisch Verfahrensschritte gemäß einem Ausführungsbeispiel des erfindungsgemäßen Verfahrens.

In Schritt 201 werden die Werte für R1, also die Grenze zwischen der ersten Eingabezone und der dritten Eingabezone, und R2, also der Grenze zwischen der dritten Eingabezone und der zweiten Eingabezone festgestellt, die vorzugsweise fest in der Steuereinrichtung gespeichert sind. Die Grenze ist im Fall der kreisförmigen Kulisse durch den Abstand R zwischen dem Zentrum der Aussparung und der aktuellen Position des beweglichen Elements bestimmt. Die erste Eingabezone 41 ist der Proportionalsteuerung zugeordnet und wird auch als Proportionalzone bezeichnet. Die zweite Eingabezone 42 ist der Dynamiksteuerung zugeordnet und wird auch als Dynamikzone bezeichnet. In der dritten Eingabezone 43 bewirkt die Bewegung des beweglichen Elements keine Aktivität einer mit der Bedienvorrichtung verbundenen Bewegungseinrichtung, diese wird als Totzone bezeichnet.

Nachfolgender Schritt 202 sieht eine Wartezeit von 10 ms vor. Nachfolgender Schritt 203 sieht vor: Joystickposition in Raumwinkeln $\alpha 1$, $\alpha 2$ abfragen, Motorposition X2, Y2 der beiden Schrittmotoren der Bewegungseinrichtung abfragen. Nachfolgender Schritt 204 sieht vor: Joystickposition $\alpha 1$, $\alpha 2$ in Polarkoordinaten, Radius R und Winkel innerhalb der x-y-Ebene umrechnen. Nachfolgender Schritt 205 sieht vor: prüfen, ob Radius R kleiner ist als Radius R1. Falls das zutrifft ("yes"), wird die Proportionalsteuerung angewandt, 206. Falls das nicht zutrifft ("no"), erfolgt eine weitere Abfrage 209.

Zur Anwendung der Proportionalsteuerung wird das Ausgabesignal 32 gemäß einer von $\alpha 1$, $\alpha 2$ abhängigen Steuerungsregel für die proportionale Steuerung erzeugt, 207. Dies geschieht mithilfe einer Antriebssteuerung (nicht gezeigt) für die Motoren der Bewegungseinrichtung. Die Antriebssteuerung ist hier Teil der Bedienvorrichtung 1. Die Steuereinrichtung erzeugt ein zweites Eingabesignal für die Antriebssteuerung. Diese regelt die Motoraktivität und steuert deren Position und Geschwindigkeit. Die Motoren der Bewegungseinrichtung erreichen dann die durch die aktuelle Joystickposition vorgegebene Position in 10 ms, 208. Das Verfahren kehrt zu Schritt (202) zurück.

Die weitere Abfrage 209 prüft, ob der Radius R kleiner ist als der Radius R2. Falls das zutrifft ("yes"), wird die Steuerungsregel für die Totzone angewandt, 210. Dort bewirkt die Positionierung oder Bewegung des beweglichen Elements keine Aktivität einer mit der Bedienvorrichtung verbundenen Bewegungseinrichtung, 211. Falls das nicht zutrifft ("nein"), befindet sich das bewegliche Element in der Dynamikzone, 212. Es erfolgt die Anwendung der Steuerungsregel für die Dynamiksteuerung, 213. Dabei bleiben die Motoren in Bewegung, solange der Joystickhebel in der zweiten Eingabezone angeordnet ist. Das Verfahren kehrt wieder zu Schritt 202 zurück und durchläuft die Abfrageketten erneut, u.s.w.

Fig. 5b zeigt schematisch Verfahrensschritte gemäß der Dynamiksteuerung des Verfahrens in Fig. 5a. Schritt 341 sieht vor: ausgehend von den gemessenen Werten α1, α2 die Differenz R_rel aus aktuellem Radius der Position des beweglichen Elements innerhalb des zweiten Eingabebereichs 42 und Radius R2 berechnen. Nachfolgender Schritt 342 sieht vor: Geschwindigkeit ansteigend zwischen Radius R2 - hier v(R2)=0 - und maximalen Radius R_max bei Maximalauslenkung verwenden oder berechnen - v_max. Die Geschwindigkeitsänderung pro Radiusdifferenz kann dann z.B. gegeben sein durch v_max / (R_max-R2). Nachfolgender Schritt 343 sieht vor: Zwischen beiden Radien R_max und R2 interpolieren, um dem Radius R eine Geschwindigkeit zuzuordnen, oder berechnen gemäß v(R) = (v_max / (R_max-R2)) * R. Nachfolgender Schritt 344 sieht vor: Richtung für das bewegte Element der Bewegungseinrichtung entsprechend den Joystickwinkeln berechnen. Nachfolgender Schritt 345 sieht vor: Motoren in berechnete Richtung mit ermittelter Geschwindigkeit bewegen. Nachfolgender Schritt 346 sieht vor: Die Motoren bleiben in Bewegung, solange der Joystickhebel in der zweiten Eingabezone angeordnet ist.

Fig. 5c zeigt schematisch Verfahrensschritte gemäß der Proportionalsteuerung des Verfahrens in Fig. 5a. Schritt 331 sieht vor: Positionsänderung dP1 des beweglichen Elements während Zeitintervall (hier: 10 ms) berechnen. Erforderliche Positionsänderung dP2 gemäß Proportionalsteuerung berechnen. Nachfolgender Schritt 332 sieht vor: Geschwindigkeit v für die Motoren so berechnen, dass die Wegstrecke dP2 in einem Zyklus (10 ms) durchfahren wird. Nachfolgender Schritt 333 sieht vor: Motoren um Wegstrecke dP2 mit Geschwindigkeit v bewegen. Nachfolgender Schritt 334 sieht vor: Die Motoren folgen der Joystickposition im nächsten Zyklus von 10 ms.

Vorzugsweise ist die Steuereinrichtung, vorzugsweise deren ausführbarer Programmcode, dazu ausgebildet, diese Schritte des erfindungsgemäßen Verfahrens und/oder andere Schritte des erfindungsgemäßen Verfahrens auszuführen.

## Patentansprüche

1. Bedienvorrichtung (1) zur Steuerung einer ein bewegtes Element (11) aufweisenden Bewegungseinrichtung (10), insbesondere der Bewegungseinrichtung einer Mikropositioniereinrichtung, aufweisend

   a) eine elektrische Steuereinrichtung (3) und
   b) eine Eingabeeinrichtung (2) mit einem Eingabebereich (4),
   wobei durch die Eingabeeinrichtung (2) ein vom Benutzer änderbarer Positionswert erfassbar ist, der die Position und/oder Bewegung eines innerhalb des Eingabebereichs (4) anordenbaren beweglichen Elements (5) repräsentiert,
   wobei die Eingabeeinrichtung (2) ein elektrisches Signal erzeugt, das von dem Positionswert abhängig ist und das als Eingabesignal (31) für die elektrische Steuereinrichtung dient, und wobei die elektrische Steuereinrichtung (3) in Abhängigkeit vom Eingabesignal (31) ein Ausgabesignal (32) erzeugt, mit dem die Bewegung der Bewegungseinrichtung steuerbar ist,
   wobei der Eingabebereich (4) zumindest eine erste Eingabezone (41) und eine zweite Eingabezone (42) aufweist, und die Steuerungseinrichtung so ausgebildet ist, dass
   das Ausgabesignal (32) von der Steuereinrichtung (3) gemäß einer ersten Steuerungsregel (33) in Abhängigkeit vom Eingabesignal erzeugt wird, wenn das bewegliche Element (5) in der ersten Eingabezone (41) angeordnet ist,
   und das Ausgabesignal (32) von der Steuereinrichtung (3) gemäß einer zweiten Steuerungsregel (34) in Abhängigkeit vom Eingabesignal (31) erzeugt wird, wenn das bewegliche Element (5) in der zweiten Eingabezone (42) angeordnet ist.

2. Bedienvorrichtung gemäß Anspruch 1, wobei die erste Steuerungsregel eine Proportionalsteuerung der Bewegung des bewegten Elements der Bewegungseinrichtung in Abhängigkeit von dem Positionswert bewirkt.

3. Bedienvorrichtung gemäß Anspruch 1 oder 2, wobei die zweite Steuerungsregel eine Dynamiksteuerung der Bewegung des bewegten Elements der Bewegungseinrichtung in Abhängigkeit von dem Positionswert bewirkt.

4. Bedienvorrichtung gemäß einem der vorherigen Ansprüche, wobei der Eingabebereich als dritte Eingabezone eine Totzone (43) aufweist, die zwischen der ersten (41) und der zweiten Eingabezone (42) liegt.

5. Bedienvorrichtung gemäß einem der vorherigen Ansprüche, wobei der Eingabebereich mindestens zwei Eingabezonen aufweist, insbesondere diese erste und diese zweite Eingabezone, die durch mindestens eine Zonengrenze getrennt sind, und wobei die Bedienvorrichtung eine Signaleinrichtung (24, 26) aufweist, die dazu ausgebildet ist, dem Benutzer einen Wechsel zwischen wenigstens zwei dieser durch eine Zonengrenze getrennten Eingabezonen zu signalisieren, wenn das bewegliche Element seine Position so verändert, dass es diese Zonengrenze überschreitet.

6. Bedienvorrichtung gemäß Anspruch 5, wobei die Signaleinrichtung dazu ausgebildet ist, dem Benutzer ein haptisches und/oder akustisches und/oder optisches Signal zu geben, wenn dieser Wechsel erfolgt.

7. Bedienvorrichtung gemäß Anspruch 4 und 6, wobei die Signaleinrichtung dazu ausgebildet ist, dem Benutzer das Signal, insbesondere das haptische Signal, zu geben, wenn der Wechsel zwischen der Totzone (43) und der zweiten Eingabezone (42) erfolgt.

**8.** Bedienvorrichtung gemäß einem der vorherigen Ansprüche, die eine Einrichtung zur Kraftrückkopplung (24, 26) aufweist, die dazu ausgebildet ist, dem Benutzer in Abhängigkeit von dem Positionswert eine veränderliche Gegenkraft entgegenzusetzen, wenn dieser die Position des beweglichen Elements ändert.

**9.** Bedienvorrichtung gemäß Anspruch 7 und 8, wobei die Einrichtung zur Kraftrückkopplung (24, 26) als diese Signaleinrichtung (24, 26) dient.

**10.** Bedienvorrichtung gemäß Anspruch 8 oder 9, wobei die Einrichtung zur Kraftrückkopplung auch als Rückstelleinrichtung (24, 26) dient, um das bewegliche Element mittels der Gegenkraft in eine Ausgangsposition zurückzustellen.

**11.** Bedienvorrichtung gemäß Anspruch 8, 9 oder 10, wobei die Einrichtung zur Kraftrückkopplung (24, 26) ein um eine Nullstellung durch eine Federeinrichtung (24) gefedert gelagertes Kulissenelement (26) aufweist, das eine als Kulisse dienende Aussparung aufweist, deren Innenseite als Gleitbahn für das bewegliche Element dient.

**12.** Bedienvorrichtung gemäß einem der vorherigen Ansprüche, wobei die Eingabeeinrichtung das bewegliche Element aufweist, das ein Joystickhebel ist.

**13.** Mikropositioniervorrichtung (1, 10), aufweisend die Bedienvorrichtung (1) gemäß einem der Ansprüche 1 bis 12, und ferner aufweisend die Bewegungseinrichtung (10).

**14.** Verfahren zur Erzeugung eines Ausgabesignals zur Steuerung einer ein bewegtes Element aufweisenden Bewegungseinrichtung, insbesondere der Bewegungseinrichtung einer Mikronositioniervorrichtung,
wobei mittels der einen Eingabebereich aufweisenden Eingabeeinrichtung einer Bedienvorrichtung ein elektrisches Signal erzeugt wird, das als Eingabesignal für eine elektrische Steuereinrichtung der Bedienvorrichtung dient,
wobei durch die elektrische Steuereinrichtung in Abhängigkeit vom Eingabesignal ein Ausgabesignal generiert wird, mit dem die Position und/oder Bewegung einer Bewegungseinrichtung steuerbar ist,
wobei dieser Eingabebereich eine erste Eingabezone aufweist, wobei das Ausgabesignal von der Steuereinrichtung gemäß einer ersten Steuerungsregel in Abhängigkeit vom Eingabesignal erzeugt wird, wenn das bewegliche Element in der ersten Eingabezone angeordnet ist,
und eine zweite Eingabezone aufweist, wobei das Ausgabesignal von der Steuereinrichtung gemäß einer zweiten Steuerungsregel in Abhängigkeit vom Eingabesignal erzeugt wird, wenn das bewegliche Element in der zweiten Eingabezone angeordnet ist.

**15.** Datenträger, der Computerdaten trägt, welche von einer elektrischen Steuereinrichtung einer Bedienvorrichtung zur Ausführung des Verfahrens gemäß Anspruch 14 verwendet werden.

**16.** Verwendung der Vorrichtung nach einem der Ansprüche 1 bis 13 oder des Verfahrens nach Anspruch 14 zur Manipulation von biologischen Zellen.

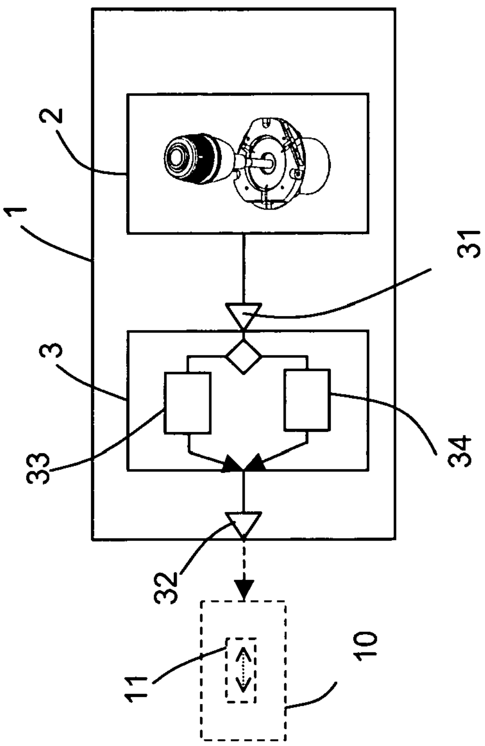
1
2
3
31
32
33
34
10
11

Fig. 1a

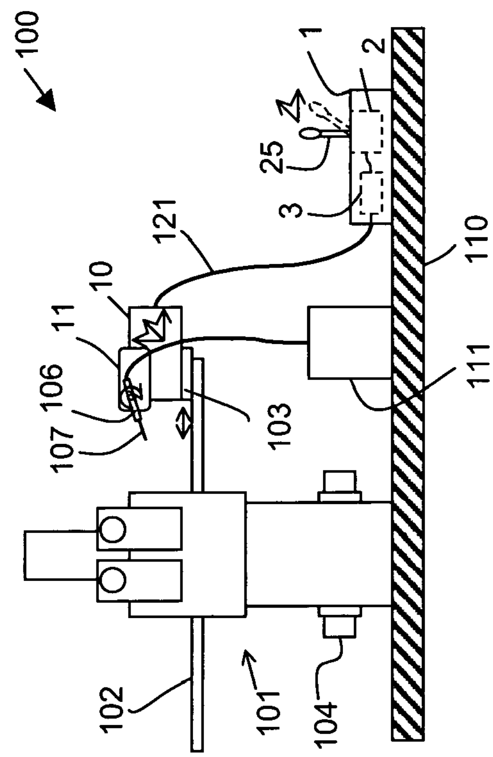
100
1
2
25
3
121
10
11
106
107
103
111
110
102
101
104

Fig. 1b

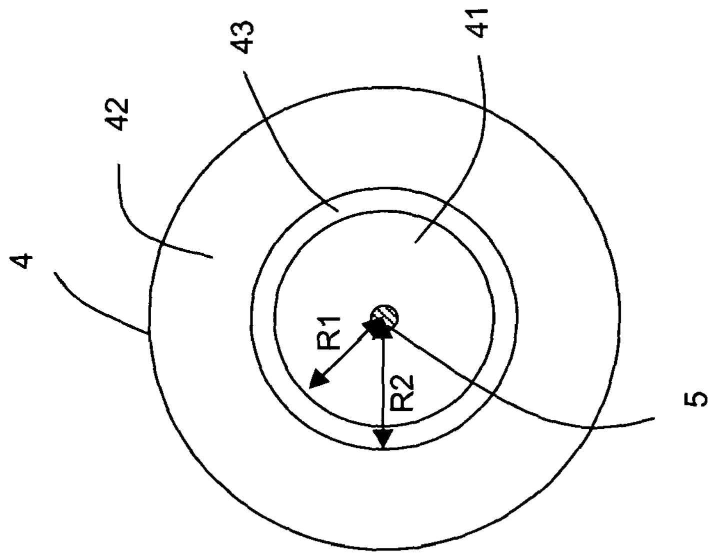


Fig. 2b

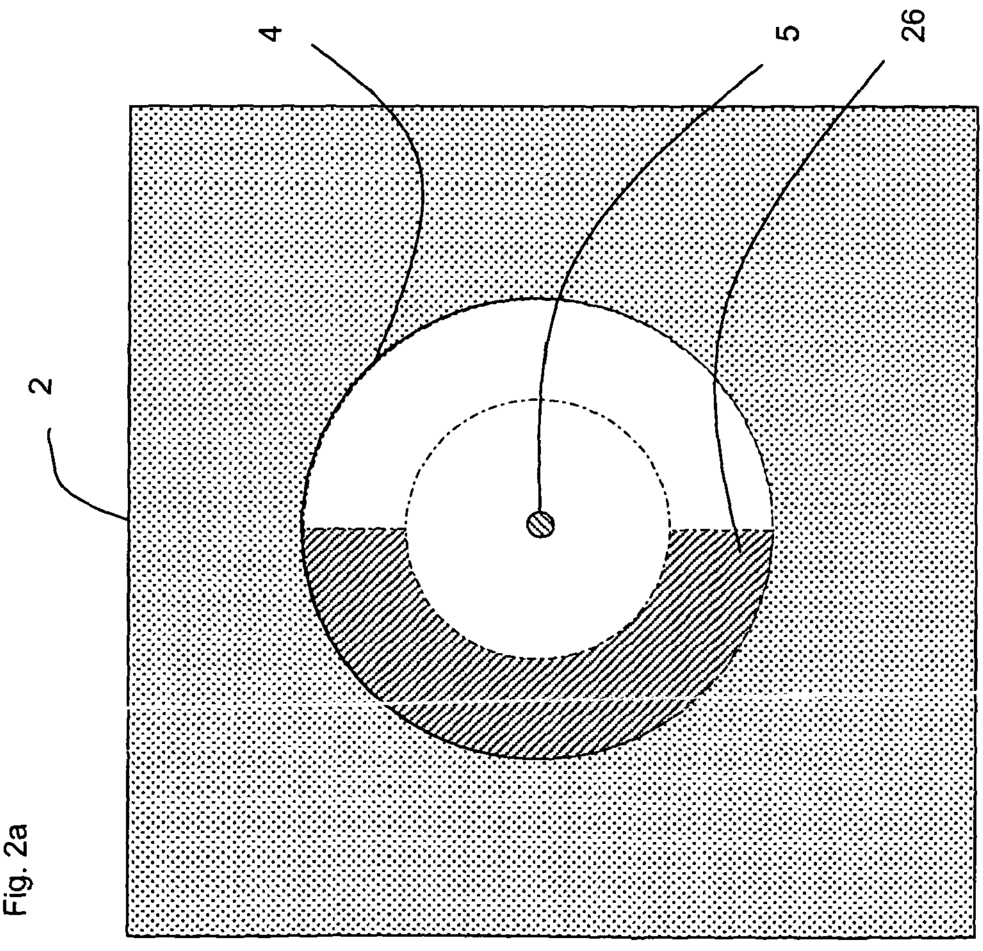


Fig. 2a

Fig. 2d

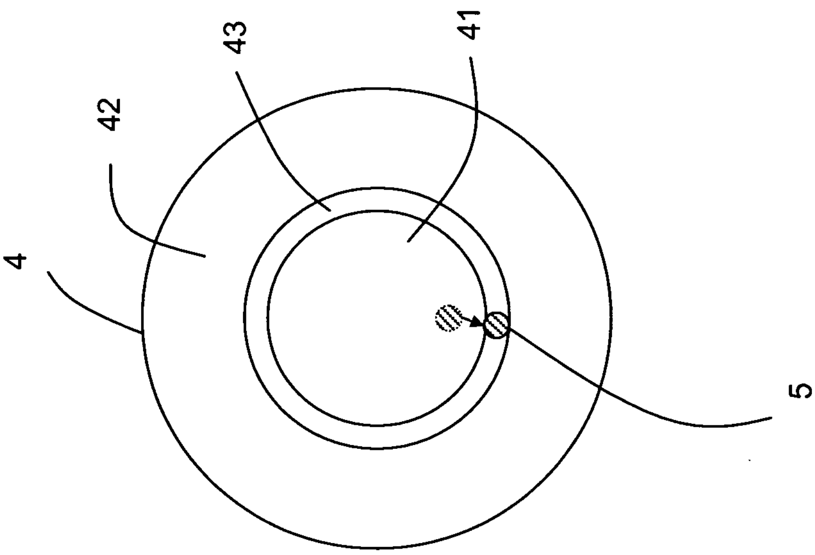


Fig. 2c

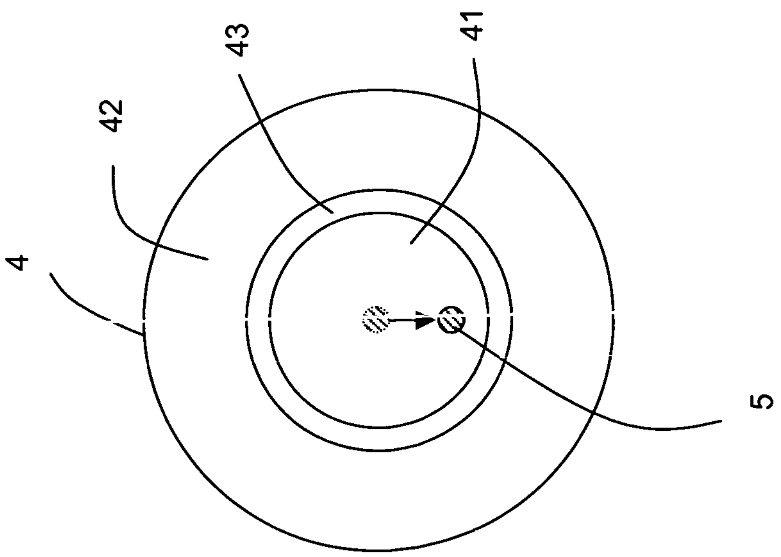

Fig. 2f

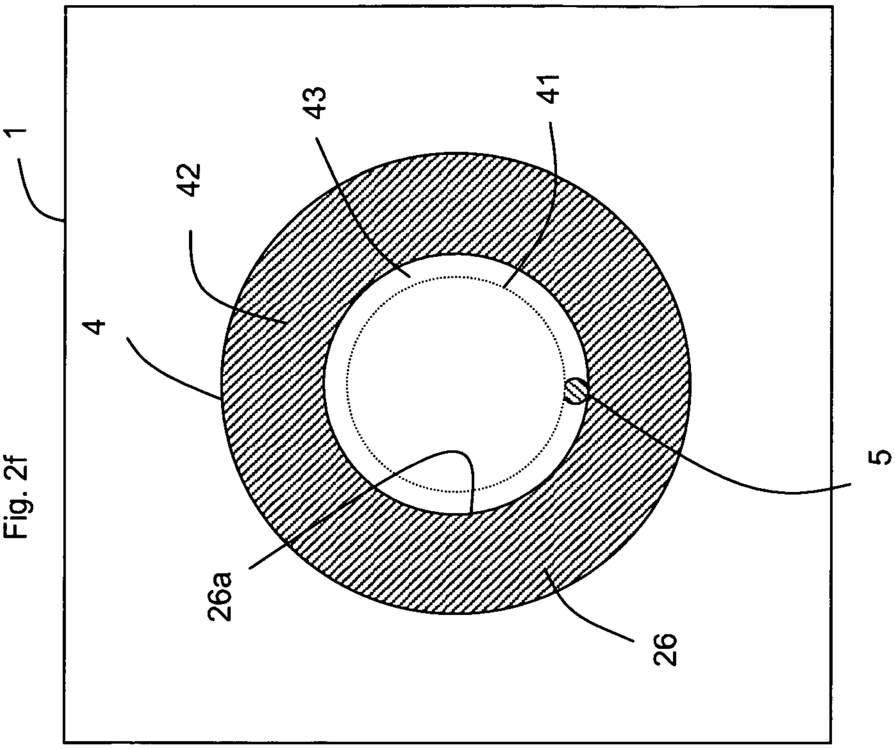


Fig. 2e

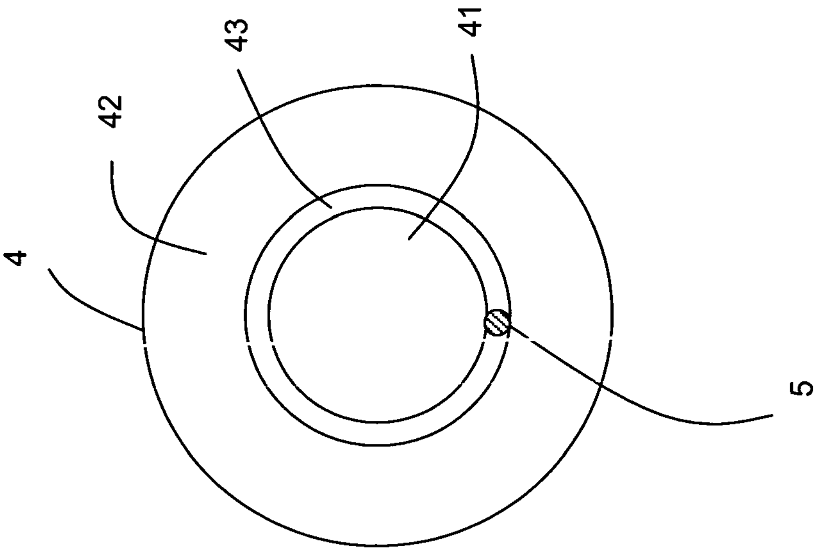

Fig. 2h

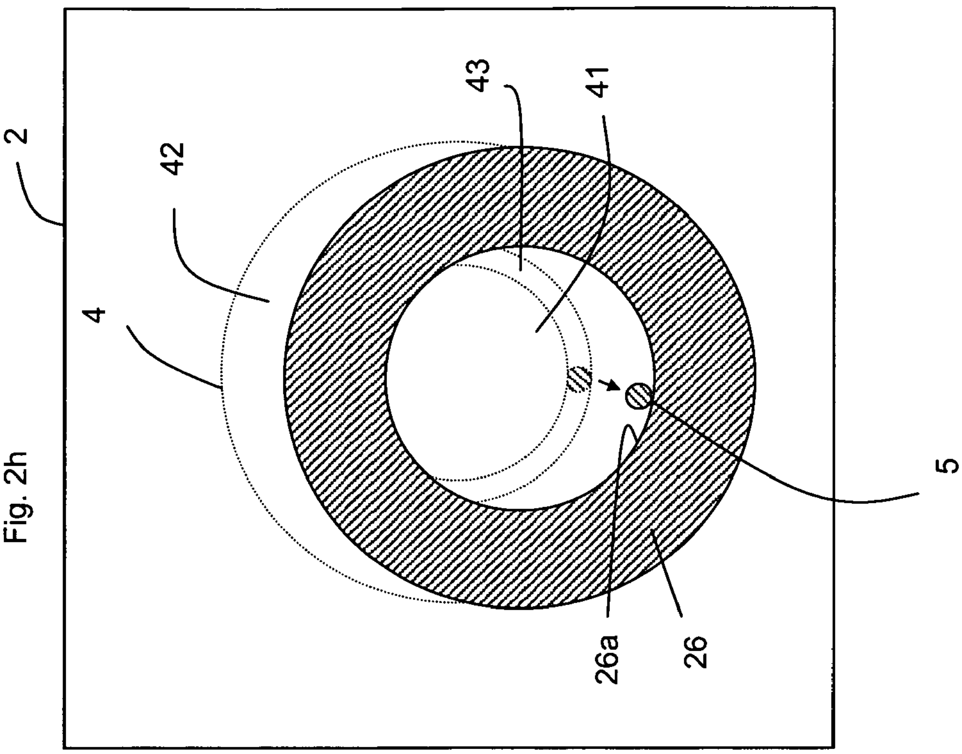


Fig. 2g

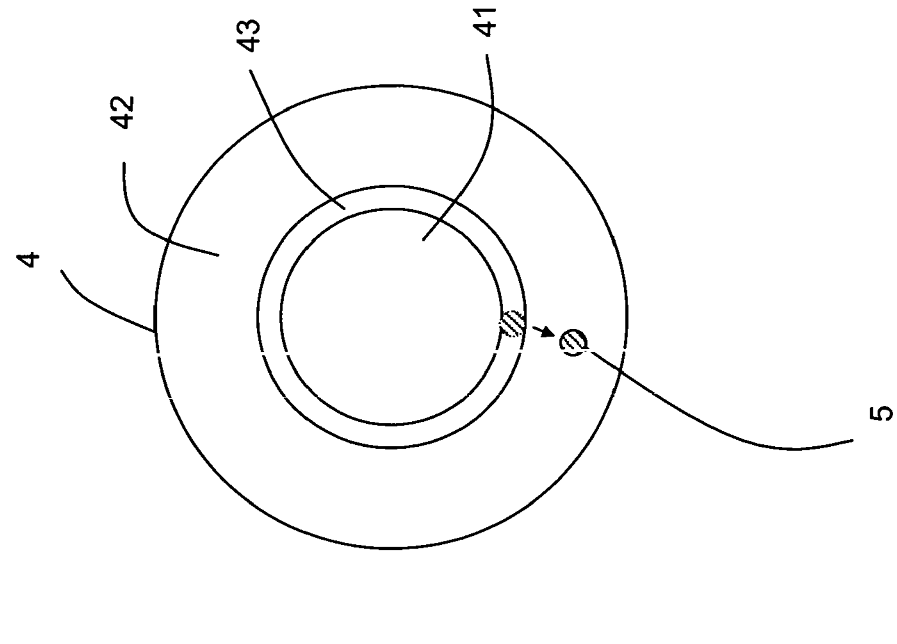

Fig. 3a

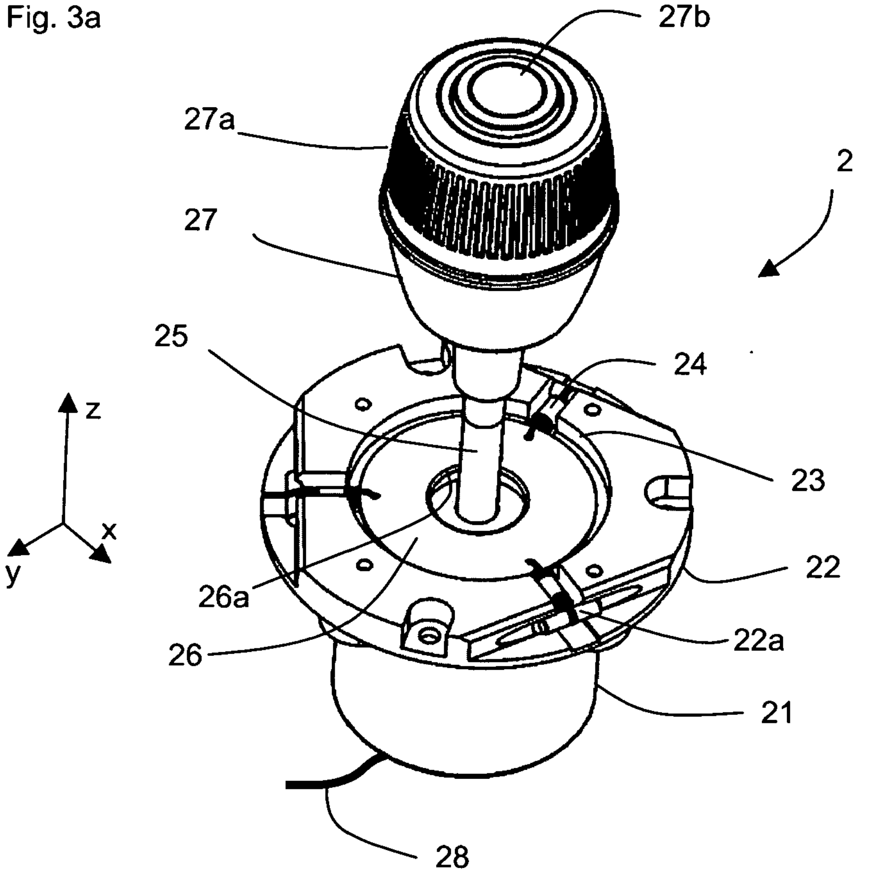


Fig. 3b

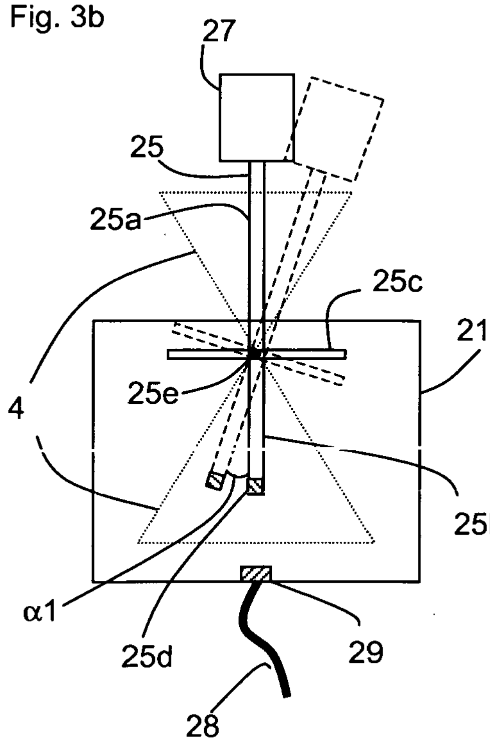


Fig. 3c

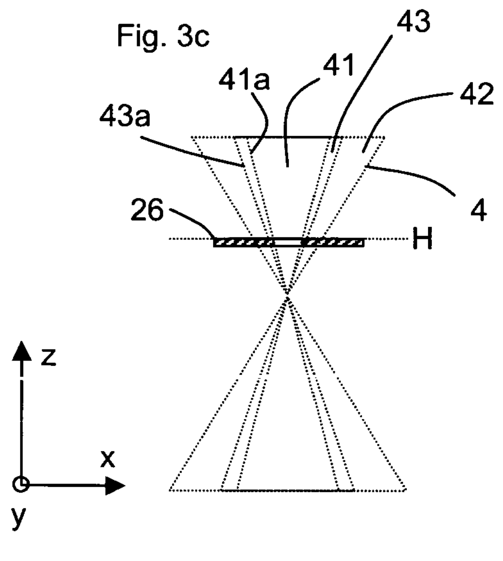

Fig. 4a

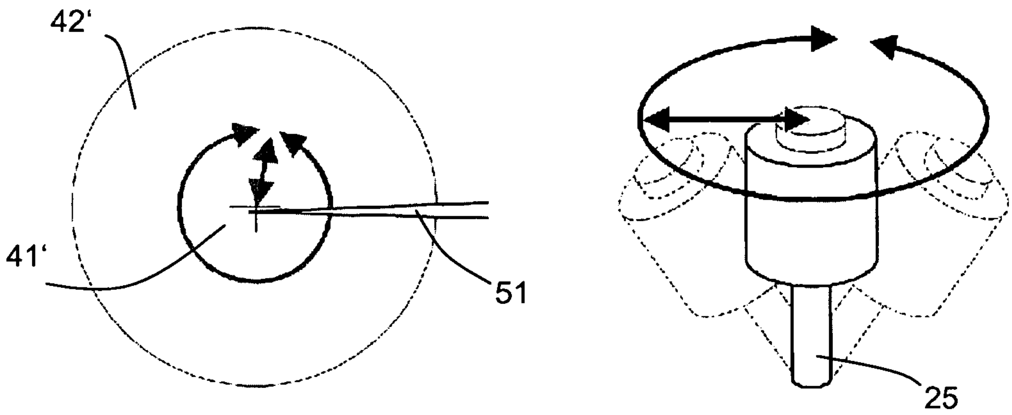


Fig. 4b

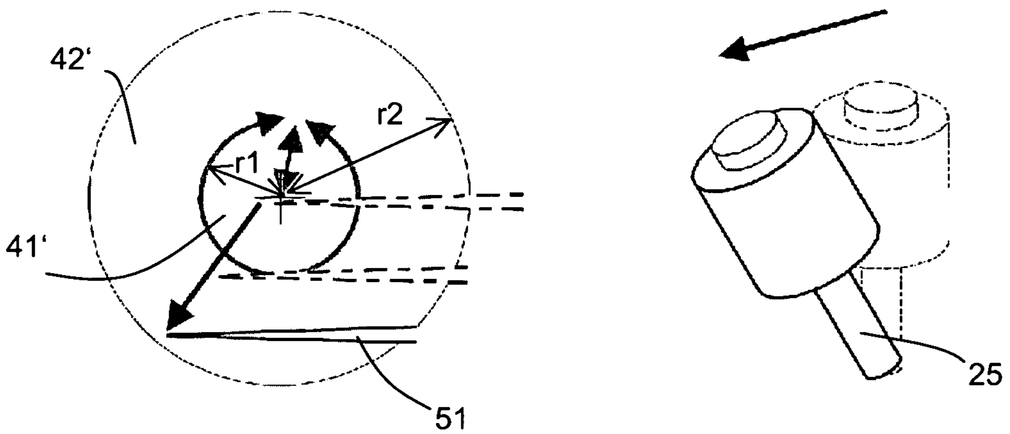


Fig. 4c

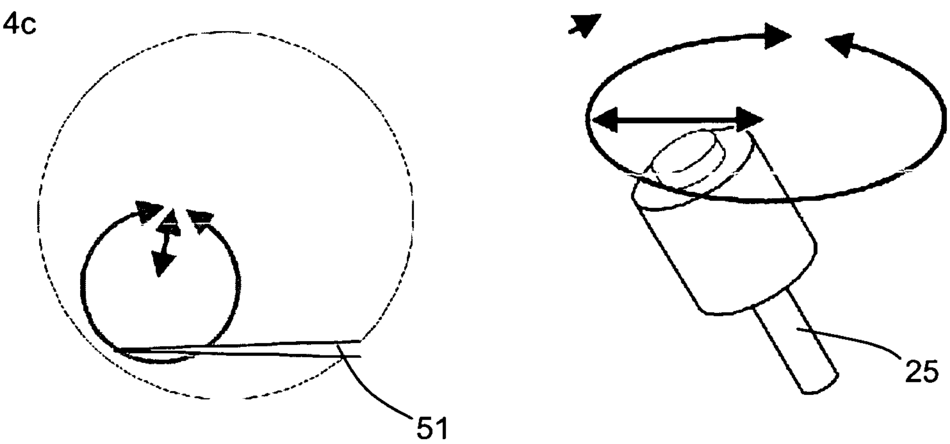

Fig. 5a

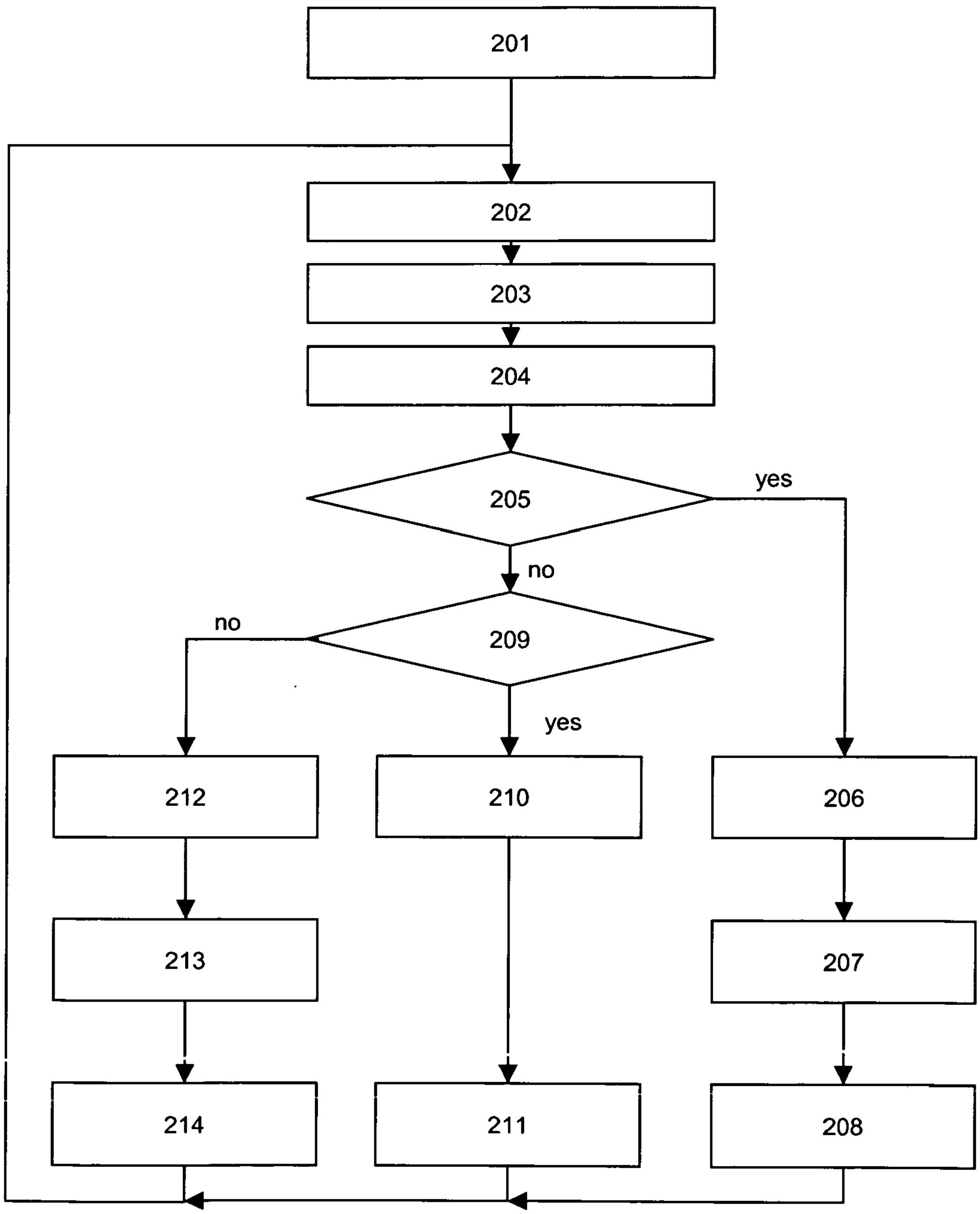
201
202
203
204
205
yes
no
209
no
yes
212
210
206
213
207
214
211
208

Fig. 5b

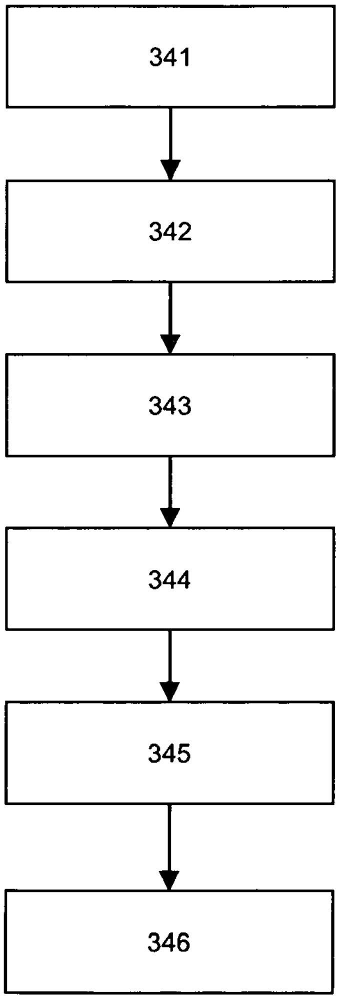


Fig. 5c

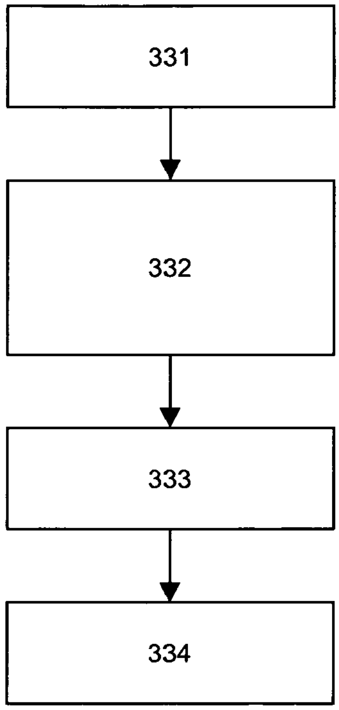

Fig. 6a

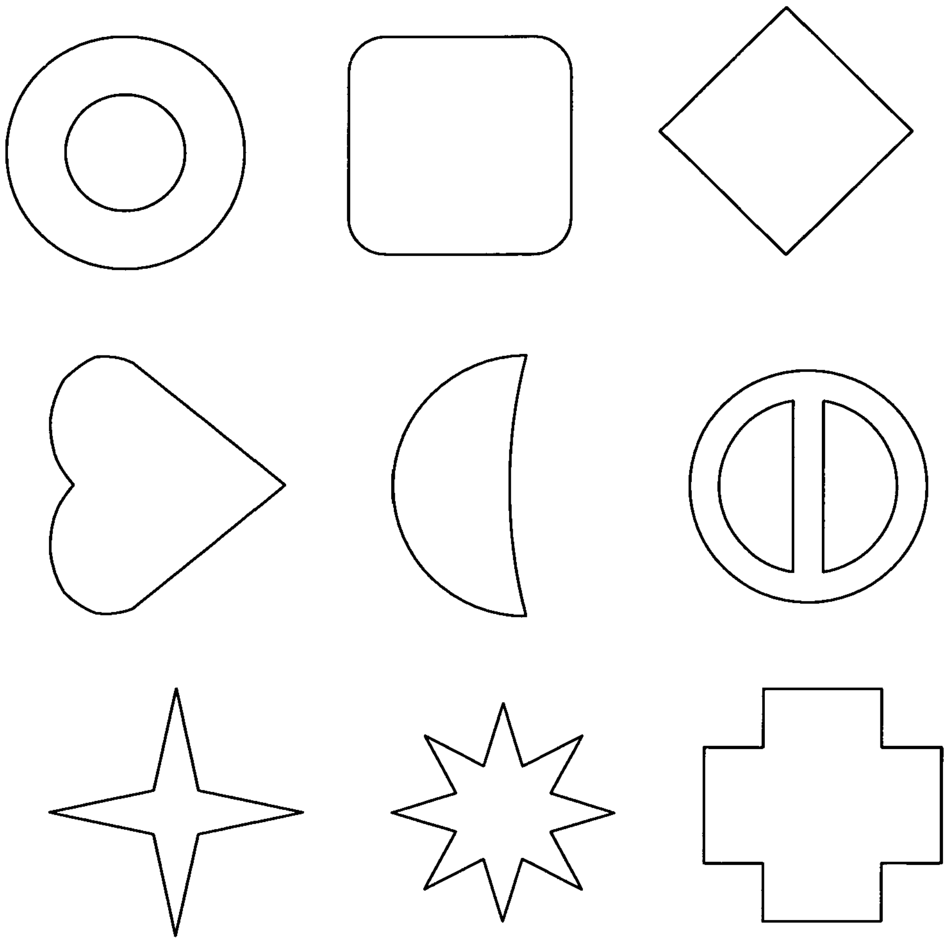

Fig. 6b

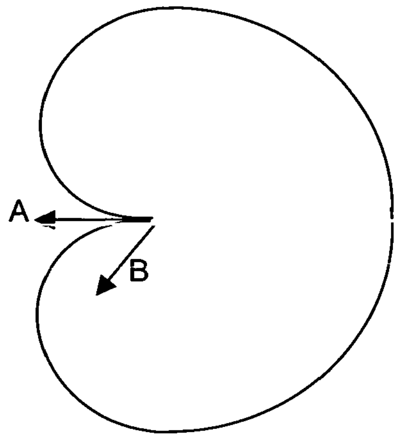

Europäisches Patentamt
European Patent Office
Office européen des brevets

# EUROPÄISCHER RECHERCHENBERICHT

Nummer der Anmeldung
EP 12 00 5068

| Kategorie | EINSCHLÄGIGE DOKUMENTE<br>Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br><br>Y | JP 2003 245882 A (MITSUBA CORP) 2. September 2003 (2003-09-02)<br>* Zusammenfassung; Abbildungen 1,2,6 * | 1-4,8, 10,12, 14,15<br>16 | INV.<br>B25J13/02 |
| Y | JP H07 227783 A (SHIMADZU CORP) 29. August 1995 (1995-08-29)<br>* Zusammenfassung; Abbildungen 1,4 * | 16 | |
| X | JP H09 76177 A (MEIDENSHA ELECTRIC MFG CO LTD) 25. März 1997 (1997-03-25)<br>* Zusammenfassung; Abbildung 3 * | 1,14 | |
| | | | RECHERCHIERTE SACHGEBIETE (IPC)<br>B25J<br>G06F |

Der vorliegende Recherchenbericht wurde für alle Patentansprüche erstellt

| Recherchenort | Abschlußdatum der Recherche | Prüfer |
|---|---|---|
| München | 18. Juni 2013 | Lumineau, Stéphane |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 12 00 5068

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-06-2013

| Im Recherchenbericht angeführtes Patentdokument | Datum der Veröffentlichung | Mitglied(er) der Patentfamilie | Datum der Veröffentlichung |
|---|---|---|---|
| JP 2003245882 A | 02-09-2003 | KEINE | |
| JP H07227783 A | 29-08-1995 | JP 2687866 B2 | 08-12-1997 |
| | | JP H07227783 A | 29-08-1995 |
| JP H0976177 A | 25-03-1997 | JP 3449059 B2 | 22-09-2003 |
| | | JP H0976177 A | 25-03-1997 |

EPO FORM P0461

Für nähere Einzelheiten zu diesem Anhang : siehe Amtsblatt des Europäischen Patentamts, Nr.12/82